# EUROPEAN PATENT SPECIFICATION

(11) **EP 4 122 845 B1**
(45) Date of publication and mention of the grant of the patent: **28.08.2024**
(21) Application number: 22182642.3
(22) Date of filing: 01.07.2022
(51) Int. Cl.: B65G 21/20

(54) **A HOUSING ELEMENT FOR MAGNETS ADAPTED TO BE ASSOCIATED WITH A SUPPORT AND GUIDE MAGNETIC STRUCTURE**
EIN GEHÄUSEELEMENT FÜR MAGNETE, DAS MIT EINER MAGNETISCHEN TRAG- UND FÜHRUNGSSTRUKTUR VERBUNDEN WERDEN KANN
UN ÉLÉMENT DE BOÎTIER POUR AIMANTS ADAPTÉ POUR ÊTRE ASSOCIÉ À UNE STRUCTURE MAGNÉTIQUE DE SUPPORT ET DE GUIDAGE

(30) Priority: 20.07.2021 IT 202100019175
(43) Date of publication of application: 25.01.2023
(73) Proprietor: Movex S.p.A., 24060 Castelli Calepio (BG) (IT)
(72) Inventor: MARSETTI, Sergio, 6900 PARADISO (CH); MARSETTI, Matteo, 24060 TELGATE (BG) (IT)
(74) Representative: Kratter, Carlo

(56) References cited:
- EP-A1- 0 916 599
- WO-A1-2010/092473
- WO-A1-2018/172290
- DE-U1- 29 802 447

## Description

The present invention refers to a housing element for at least one magnet of the type adapted to be associated with a support and guide magnetic structure, to hold a conveyor with articulated links movable along said support and guide structure joined with said support and guide structure.

Housing elements of the type indicated above are already known, and are for example described in EP0916599A1. The housing elements described in EP0916599, which comprises the features mentioned in the preamble of claim 1, are difficult to assemble, as the magnets are inserted in the relative seats of the housing elements and then the ferromagnetic plate is placed on top of the magnets, which plate is finally constrained to the housing element by means of a dedicated screw, that is by means of a dedicated constraint member, additional to the housing element. When the ferromagnetic plate is brought closer to the magnets, it may happen that they move from their seats and attach to the ferromagnetic plate before it has been correctly positioned, thus moving from their initial correct position. When this happens, the magnets must be repositioned before the ferromagnetic plate is constrained with the screws, and this causes a considerable slowdown in the operations for assembling the housing elements.

DE29802447U1 describes a housing element adapted to house a ferromagnetic plate and at least two magnets magnetically constrained to said plate, wherein the housing element comprises a seat adapted to house the magnets therein and which is closed by the plate when it is associated to an opening of said seat. The plate is coupled to the seat by friction with the edges that delimit the opening of the seat, while the magnets are freely housed in the seat and are only magnetically constrained to the plate. When the ferromagnetic plate is brought closer to the seat of the housing element, it may happen that the magnets move from their predetermined and optimal position on the plate and / or come off the plate before the plate is correctly positioned. When this happens, the magnets must be repositioned before they constrain the plate to the relative seat by friction, and this causes a considerable slowdown in the operations for assembling the housing elements.

WO2018 / 172290 describes a housing element wherein the assembly of the magnets and the ferromagnetic plate, once they have been inserted in the relative seats provided in the housing element, requires an additional element (for example an upper and / or lower guide track) to remain housed in the seats, which closes the seats themselves and has to be constrained (for example by screws) to the housing element. This assembly of the housing elements is complicated and time-consuming to perform.

WO2010 / 092473 describes a conveyor system which comprises: rails adapted to also act as housing elements for a ferromagnetic plate and a plurality of electromagnets, control means for sequentially operating said electromagnets, and at least one support element which is movable above the housing elements and provides therein at least one permanent magnet, adapted to interact with the electromagnets provided in the tracks so that the support element can slide over the tracks.

The object of the present invention is to provide a housing element according to the pre-characterizing part of the main claim, which simplifies and speeds up the operations necessary to associate the magnets and the ferromagnetic plate in the relative seats of the housing element and which ultimately simplifies and speeds up the assembly of the housing element.

This and other objects which will be evident to those skilled in the art are achieved by a housing element according to the main claim. For a better understanding of the present invention, drawings are attached, by way of non-limiting example, in which:
Figures 1 and 2 are a perspective top view and a bottom view, respectively, of a first embodiment of a completely assembled housing element according to the invention;
Figure 3 is a perspective and exploded view thereof;
Figures 4 and 5 are two perspective views of two phases of the assembly steps of the housing element in figure 1;
Figures 6A, 6B and 7-8 are a schematic top view, an enlarged schematic top view of the detail indicated by the arrow w in fig. 6A, a partial section view (taken along the line VII / VII of fig. 6A) and a bottom view, respectively, of a six tracks and curve-shaped support and guide structure, also comprising housing elements;
Figures 9 and 10 are a schematic and exploded perspective view, respectively, of a second and a third embodiment of a housing element according to the invention;
Figure 11 is a perspective schematic view of a seat for housing a housing element;
Figure 12A is an enlarged schematic sectional view of a detail of the seat of fig. 11 when it also houses a housing element;
Figure 12B is an enlarged schematic sectional view of a detail of the seat of fig. 11;
Figure 13A is a schematic sectional and enlarged view of a detail of the housing element of fig. 1 according to a first embodiment;
Figure 13B is a schematic sectional and enlarged view of a detail of the housing element of fig. 1 according to a second embodiment;
Figures 14A-D and 15A-D are schematic perspective views of two further embodiments of the housing element of fig. 1;
Figures 16A and 16B are a schematic top view and an enlarged schematic top view, respectively, of a one track and curve-shaped support and guide structure, also comprising housing elements;
Figures 17A-C are schematic perspective views of a further embodiment of the housing element of fig. 1,
Figure 17D is a schematic cross-sectional view thereof, when it is associated with a support and guide structure.

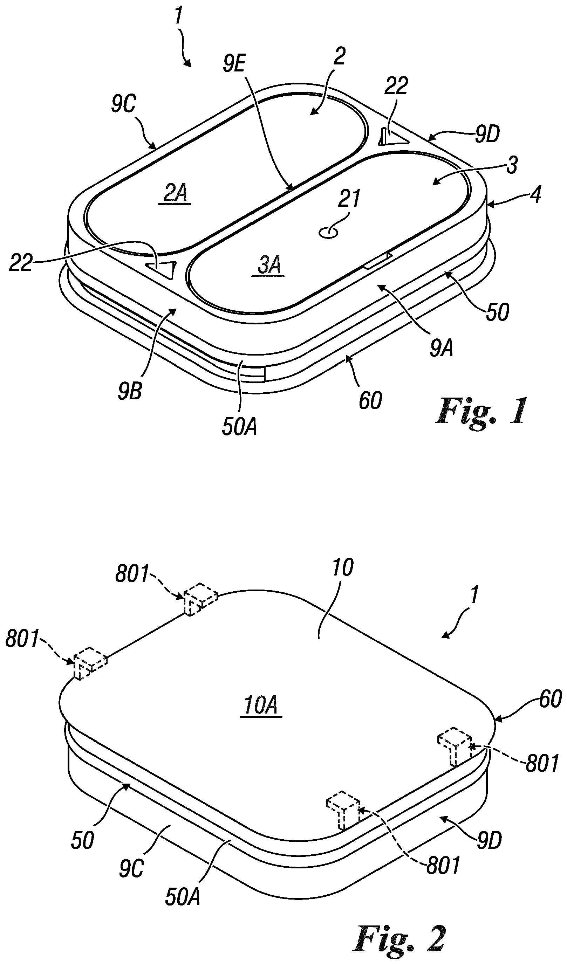

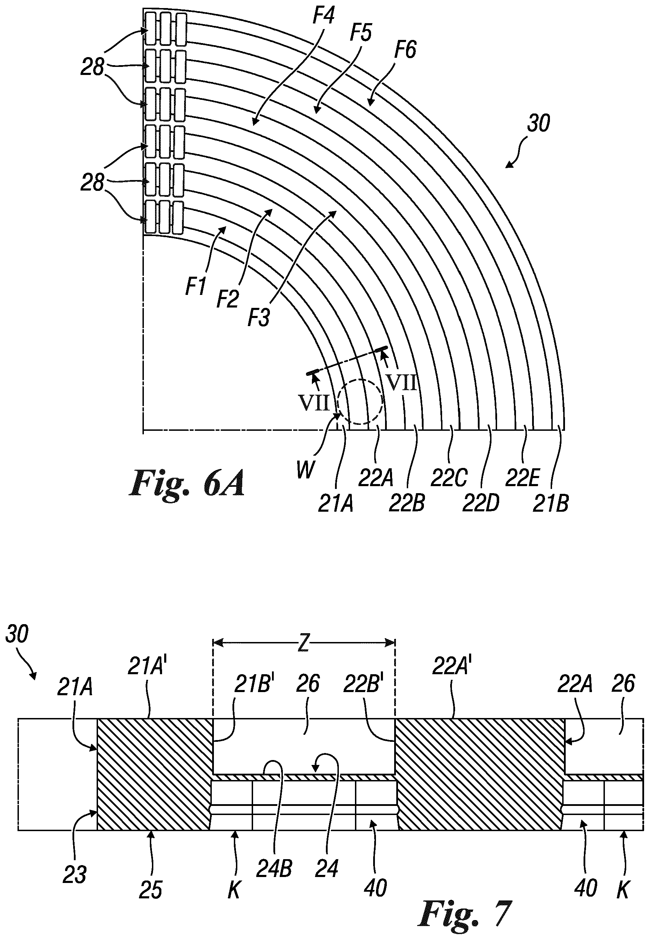

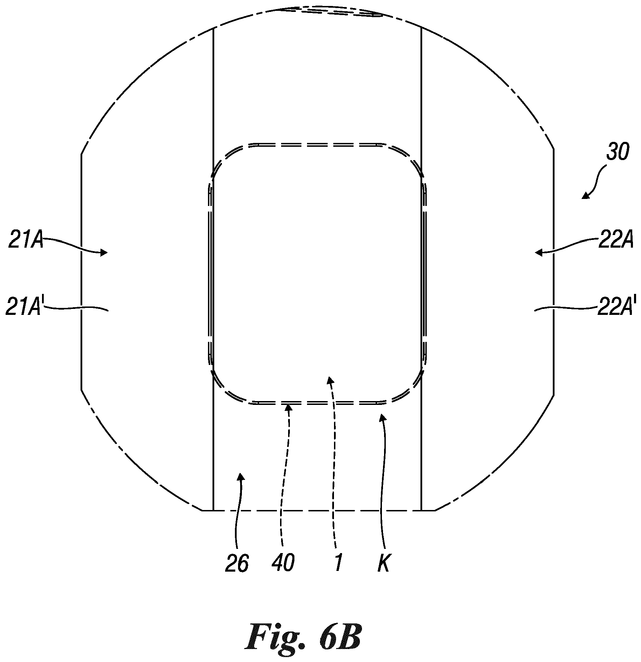

With reference to figures 1-6, they show a housing element 1 for two magnets 2, 3, of the type adapted to be associated with a support and guide magnetic structure 30 (fig. 6), adapted to hold a usual conveyor with articulated links 28 (schematically and partially shown in fig. 6) movable along said support and guide structure 20.

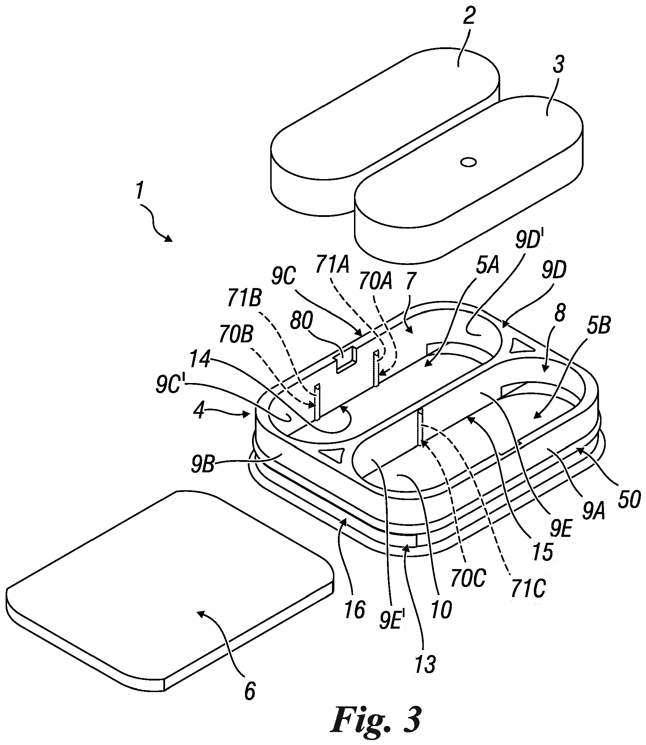

The housing element 2 comprises: a body 4 having at least two seats 5A, B (fig. 3) for housing said at least two magnets 2, 3 and a plate 6 (fig. 3) in a ferromagnetic material. The body 4 has at least two openings 7, 8 for inserting the magnets 2, 3 in the at least two seats 5A, B, and walls 9A-E, 10 adapted to delimit said at least two seats 5A, B for housing the two magnets 2, 3; wherein said magnets 2, 3 when housed in said at least two seats 5A, 5B are also in contact with said plate 6.

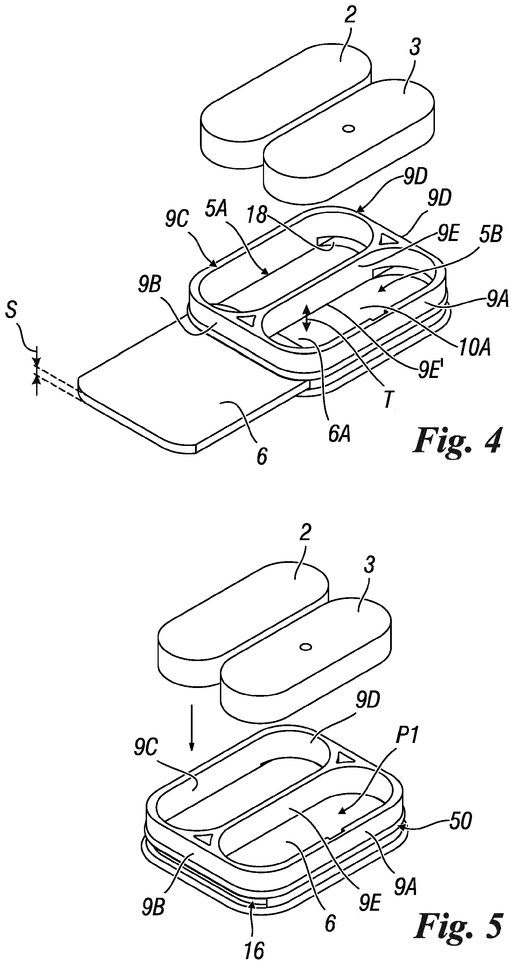

According to the invention, the at least two seats 5A, B of the body 4 of the housing element 1 has, at one end zone 13 thereof, a part 14 which is shaped and sized in such a way that it can house said plate 6 inside said at least two seats 5A, B, and said body 4 comprises at least one part 15 adapted to hold said plate 6 in a predetermined position P1 (fig. 5) in the same seat, even when it is desired to insert and / or extract the magnets 2, 3 from said seats, so as to facilitate the positioning and / or handling of the magnets themselves and in general the assembly of the housing element.

More particularly, the body 4 of the housing element has, for example, a substantially flat parallelepiped closed box-like shape, and is open at the top at the two seats for inserting the magnets. The body 4 comprises side walls 9A-D and a bottom wall 10. These walls, together with a central wall 9E, delimit in the body 4 two identical seats 5A and 5B, in which the two magnets 2 and 3 are housed. As described more in detail below, the bottom of the two seats 5A and 5B includes a part 14 which is shaped and sized in such a way that it can house the plate 6. The central wall 9E, according to the invention, does not extend up to the bottom wall 10, but the first edge 9E' thereof (fig. 4) is spaced from this bottom wall 10 by a distance or section T (fig. 4) equal to or slightly less than the thickness S (fig. 4) of the plate 6 (the section T is for example 1% -10% greater than the thickness S).

Advantageously, one of the side walls 9A-D of the body 4 (in figures 1-5, the wall 9B) has, near the bottom wall 10, a through slot 16 adapted to allow the plate 6 to be inserted into the seats 5A, B for the magnets, preferably in contact with the internal face 10A (fig. 4) of the bottom wall 10, and below and preferably in contact with the first edge 9E' (fig. 4) of the central wall 9E. The plate 6 is sized in such a way that, when passing through the slot 16 (fig. 3) this plate 6 is inserted into the body 4, it is completely inserted in the body 4 of the housing element 2, in the predetermined final position P1 (as shown in fig. 5). In this position, the central wall 9E prevents the plate from being lifted (when, for example, the magnets are inserted or are to be removed from the seats 5A, B), that is to say it prevents movements of the plate 6 perpendicular to the bottom wall 10 of the body 4. This central wall 9E together with the slot 16 are, therefore, the parts of the body 4 adapted to hold the plate 6 in its predetermined position P1, preventing this plate from moving when the magnets are handled.

The plate 6 has a shape and dimensions substantially similar to those of the bottom wall 10 which delimits the seats 5A and 5B of the body 4, and is shaped and dimensioned in such a way that it can be inserted into the slot 16 and can be positioned and cover the entire wall 10 of the body 4.

Moreover, preferably, at least one of the side walls 9A, C, D (in figure 4 the wall 9D) has, at its lower internal edge, a groove 18 (fig. 4) adapted to house the corresponding edge 6A of the plate 6, so that the plate can be completely inserted in the seats 5A and 5B and abuts in said groove.

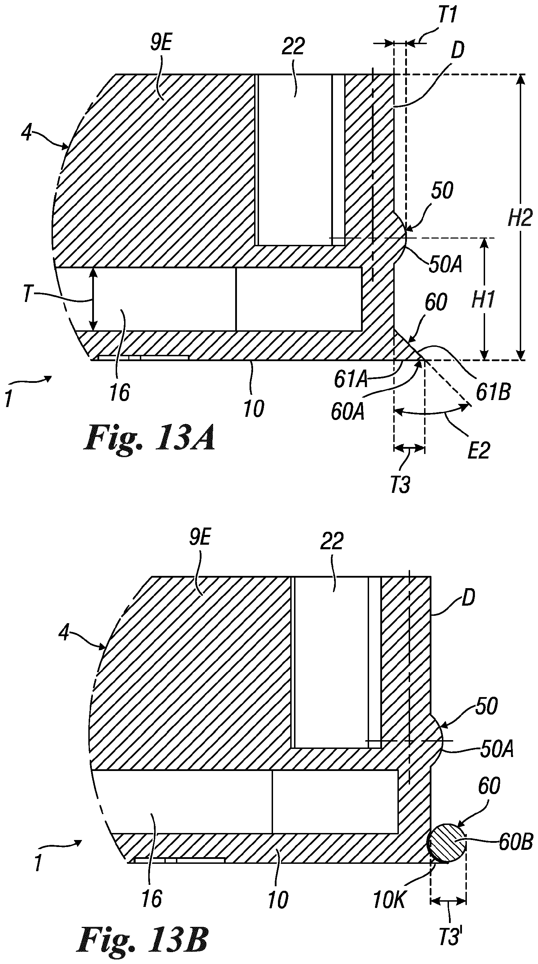

Advantageously, discharge holes 22 can be provided in the side and / or central walls of the body 4, which are adapted to avoid deformations of the body itself, during its molding. These discharge holes 22 are preferably provided in the area connecting the central wall 9E with the side walls 9B and 9D and preferably do not extend up to slot 16, but they stop just above the slot itself (as shown in fig. 13A).

The magnets 2 and 3 are sized so that they can be inserted flush into their respective seats 5A, B and so that when the plate 6 is also present on the bottom, the upper surface 2A and 3A of the magnets is flush with or slightly below the upper free edge of the side 9A-D and central 9E walls (as shown in fig. 1). Once assembled, the housing element has, therefore, a substantially flat parallelepiped shape.

Advantageously, the seats 5A and 5B and the magnets 2 and 3 that must be inserted in the seats are sized in such a way that the magnets are blocked in the seats by friction; this further guarantees that the magnets do not come out of the seats.

Preferably, retaining members 70A-C (dashed in fig. 3) are provided to improve the retention of the magnets 2, 3 in the seats 105A and 105B, which are adapted to hold the magnets by friction in the seats once they have been inserted, while also allowing the magnets to be removed by exerting a predetermined, relevant extraction force on the magnets, for example by using a screwdriver inserted in a pocket 80 of the seats 5A and 5B. The retaining members 70A-C comprise, for example, ribs 71A-C raised with respect to the surface 9A'-D' of the side walls 9A-D and / or the surfaces 9E' of the central wall 9E. The ribs 71A-C are sized in such a way that they hold the magnets by friction once they have been inserted in the respective seats 5A and 5B and can be provided on all or only some of the side and central walls. Instead of the ribs, the magnet retaining members could also provide other usual retaining elements, for example horizontal steps or ribs adapted to hold the magnets once they have been pushed into the seats below these horizontal steps and / or ribs. The retaining members, and in particular the ribs, could also be provided on the side walls of the magnets 2 and 3 and / or on both the side walls of the magnets and on the surfaces delimiting the seats 5A and 5B.

The magnets 2 and 3 are conventional permanent magnets, preferably they are inserted in the seats 5 A, B with opposite polarity, for example the magnet 2 has a northern / southern polarity (with the South pole in contact with the plate 6) and the magnet 3 has a southern / northern polarity (with the North pole in contact with the plate 6). Preferably, the magnets have an identifying mark 21 adapted to identify one of the two polarities (for example the South pole).

The magnets are sized in such a way that they can be housed inside the body 4 and / or inside or substantially flush with the free edge of the side walls 9A-D (fig. 1).

The housing element is extremely simple and quick to assemble. First of all, as shown in fig. 4, the plate 6 is inserted into the slot 16 of the wall 9B and below the lower edge 9E' of the central wall 9E, so that the plate closes at least partially at the bottom, the seats 5A and 5B for inserting the magnets 2 and 3 and the edge 6A penetrates and abuts in the grooves 18 of the wall 9D (if these grooves are present). The magnets 2 and 3 are then inserted, as shown in fig. 5, into their respective seats 5A and 5B, respecting the relative polarities. Since the plate 6 is blocked during the insertion of the magnets, the insertion of the magnets is extremely easy and can also be performed automatically.

The housing element according to the invention is associated with usual support and guide magnetic structure for a conveyor with articulated links; as usual for those skilled in the art, the presence of the magnets in the housing elements, which are in turn constrained to the support and guide structure, guarantees that the conveyor member always remains firmly in contact with the support and guide structure. The support and guide structure can be of any conventional type and can be both straight and curved, and can support the conveyor with articulated links both along a forward path and along a return path of the conveyor itself.

The guide structures can be a single track, that is adapted to support and guide a single conveyor, or multiple tracks for guiding and supporting a plurality of side-by-side conveyors.

Figures 6-8 show a partial schematic top view, and a bottom view, respectively, of a forward six tracks and curve-shaped guide structure 30.

These conventional support and guide structures generally have a curved course and are, for example, of the type comprising:
- pairs of guides 21A, 22A; 22A, 22B; 22B, 22C; 22C, 22D; 22D 22E; 22E, 21B (fig. 6) distinct and arranged at a predefined distance Z (fig. 7) from each other, wherein each guide is oriented according to a respective development axis, and defines a respective sliding track F1- F6, having sliding surfaces 21A', 22A' (fig. 7) for a conveyor 28 with articulated links (schematically and partially shown in fig. 6);
- at least one support component 23 for the guides 21A-B, 22A-E, comprising at least one first surface 24 and at least one second surface 25 opposite each other, wherein said guides 21, 22 protrude from said first surface 24 to define a sliding channel 26 delimited by side surfaces 21B', 22B' (fig. 7) of contiguous pairs of said guides 21A-B, 22A-E and by at least one portion 24B of said first surface 24, said at least one sliding channel 26 allowing to receive at least one portion of the articulated links of the conveyor 28.

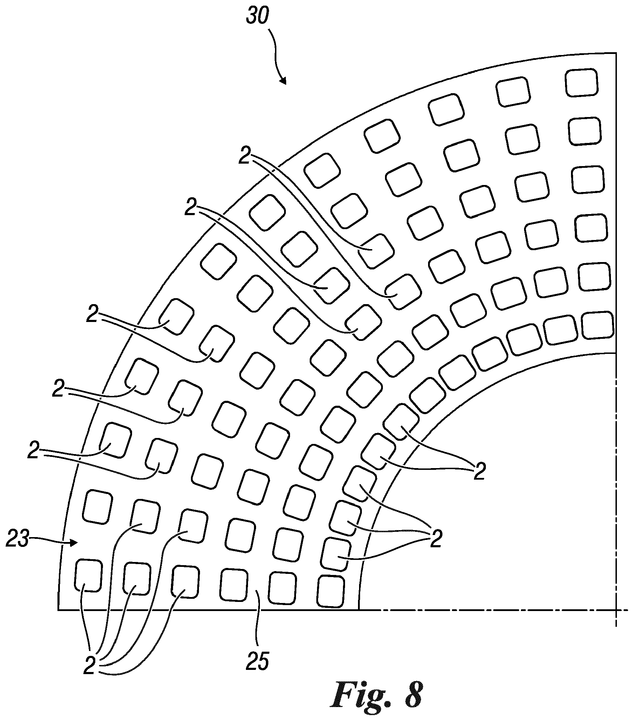

As usual for those skilled in the art, the guides 21A-B, 22A-E and the support component 23 can be in one piece, as shown in fig. 7, or be made in pieces separated from each other and coupled in the usual way. Both the guides 21A-B, 22A-E and the support component 23 can also be made in a single piece or in a plurality of pieces connected with each other in the usual way. The housing elements 2 can be constrained to the support and guide structure 30 in any usual way for those skilled in the art, for example by means of screws and / or housing the element in dedicated seats obtained in the support structure, generally in the lower surface 25 of the structure. Moreover, generally, as shown in fig. 8 and as usual for those skilled in the art, the coupling elements are positioned, for each sliding track, at the second surface 25 of the support component 23, and between the pairs of guides 21A-B, 22A-E, that is to say below the sliding channels 26, and are also uniformly spaced apart from each other; the coupling elements could, however, be positioned and / or sized in a different way from what is shown in fig. 8, however in a conventional way for those skilled in the art.

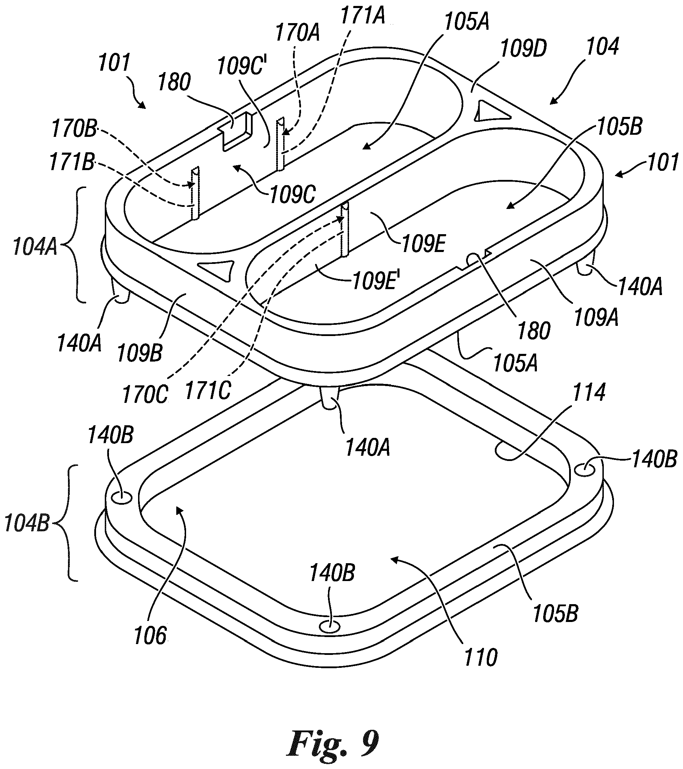

It should be noted that the embodiment of the coupling element 2 referred to in figs. 1-5 has been provided by way of example and that numerous variants are possible, all of which are within the same inventive concept. For example fig. 9 shows a second embodiment of a housing element 102 according to the invention, wherein the body 104 provides two parts (104A, 104B) which can be connected together by means of conventional connecting members 140 A, B, for example of the snap-on or friction type, and of the male-female type, or other connecting members provided, for example, in the surfaces 105 A and B opposite each other, of the two parts 104 A and B.

According to this embodiment, the part 104B comprises a seat 106 shaped and sized to house therein and flush the ferromagnetic plate 6. This seat 106 is delimited by a bottom wall 110 and side walls of the part 104B, departing from this bottom wall. The upper part 104A comprises two seats 105A and 105B for the magnets, shaped and sized as the seats for the magnets 5A and 5B described for the previous embodiment (the elements in common with the embodiment shown in figures 1-5 will be indicated in the embodiment of figure 9 with the same numbering used in figures 1-5, but increased by 100). According to this variant, this plate is not introduced into the body 104 of the housing element 102, through a slot provided in the body itself, as in the previous embodiment, but by detaching the two parts 104A and 104B of the body 104 (as in fig. 9), introducing the plate 6 in the seat 106 of the part 104B, and thus connecting the two parts together. Thanks to the connecting members 140A and 104B, the two parts 104A and 104B, once the plate 6 has been inserted, will be firmly constrained to each other, thus also ensuring a firm positioning of the plate 6, which will no longer be able to move, even when, subsequently, the magnets 2, 3 are inserted in the seats 105A and 105B of the part 104A.

Preferably, retaining members 170A-C (dashed in fig. 9) are provided to improve the retention of the magnets 2, 3 in the seats 105A and 105B, which are adapted to hold the magnets by friction in the seats once they have been inserted, while also allowing the magnets to be removed by exerting a predetermined, relevant extraction force on the magnets, for example by using a screwdriver inserted in a pocket 180 of the seats 105A and 105B. The retaining members 170A-C comprise, for example, ribs 171A-C raised with respect to the surface 109A'-D' of the side walls 109A-D and / or the surfaces 109E' of the central wall 109E. The ribs 171A-C are sized in such a way that they hold the magnets by friction once they have been inserted in the respective seats 105A and 105B and can be provided on all or only some of the side and central walls. Instead of the ribs, the magnet retaining members could also provide other usual retaining elements, for example horizontal steps or ribs adapted to hold the magnets once they have been pushed into the seats below these horizontal steps and / or ribs. The retaining members, and in particular the ribs, could also be provided on the side walls of the magnets 3 and / or both on the side walls of the magnets and on the surfaces delimiting the seats 105A and 105B.

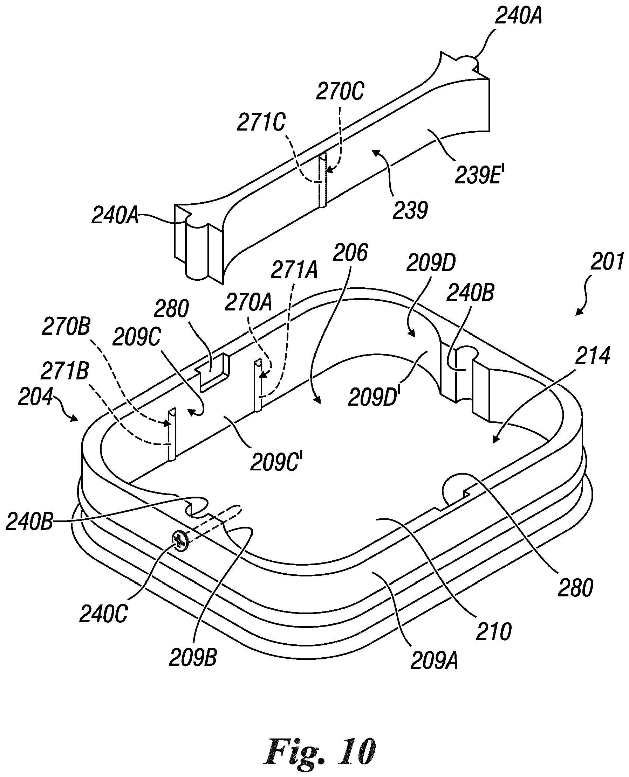

Figure 10 shows a further possible embodiment of a housing element 202 according to the invention, wherein the body 204 of the housing element is substantially similar to the body 4 of the first embodiment of figures 1-5 (the parts in common with this first embodiment will be indicated in the embodiment of Figure 10 with the same numbering used in Figures 1-5 but increased by 200). According to the variant in question, the central wall 239 is not fixed and in one piece with the rest of the body 204, and in particular with the respective walls 209B and 209D, but is movable with respect to this body (as shown in Figure 10); for this purpose, the central wall 239 provides for example at its ends conventional connecting members 240A, for example of the snap-on or friction type, and of the male-female type, or other usual connecting members, adapted to connect with connecting counter members 240B provided in the walls 209D and 209B of the body 204. In addition or as an alternative to the male and female connecting members 240A and 240B, the central wall 239 can be constrained to the body 204 also by means of screws 240C (one of which has been schematically represented in fig. 10).

According to this variant, the ferromagnetic plate 6 is not introduced into the body 204 through a slot provided in the body itself (this slot is missing in the body 204), as in the embodiment of figures 1-5, but by detaching the central wall 239 from the walls 209B and 209D of the body 204 (as schematically shown in fig. 10), so that the plate 6 can be introduced into the seat 206 of the body 204 from above and positioned in contact with the bottom wall 210. The central wall 239 is then connected with the walls 209B and 209D. Thanks to the connecting members 240A and 240B and / or 240C the central wall 239, once the plate 6 has been inserted, is firmly constrained to the body 204, thus also ensuring a firm positioning of the plate 6, which will no longer be able to move, even when, subsequently, the magnets 2, 3 are inserted in the seats delimited by the central wall 239 and by the side walls 209A-D of the body 204.

Preferably, retaining members 270A-C (dashed in fig. 10) are provided to improve the retention of the magnets 2, 3 in the seats 205A and 205B, which are adapted to hold the magnets by friction in the seats once they have been inserted, while also allowing the magnets to be removed by exerting a predetermined, relevant extraction force on the magnets, for example by using a screwdriver inserted in a pocket 280 of the seats 205A and 205B. The retaining members 270A-C comprise, for example, ribs 271A-C raised with respect to the surface 209A'-D' of the side walls 209A-D and / or the surfaces 239E' of the central wall 239E. The ribs 271A-C are sized in such a way that they hold the magnets by friction once they have been inserted in the respective seats 205A and 205B and can be provided on all or only some of the side and central walls. Instead of the ribs, the magnet retaining members could also provide other usual retaining elements, for example horizontal steps or ribs adapted to hold the magnets once they have been pushed into the seats below these horizontal steps and / or ribs. The retaining members, and in particular the ribs, could also be provided on the side walls of the magnets and / or both on the side walls of the magnets and on the surfaces delimiting the seats 205A and 205B.

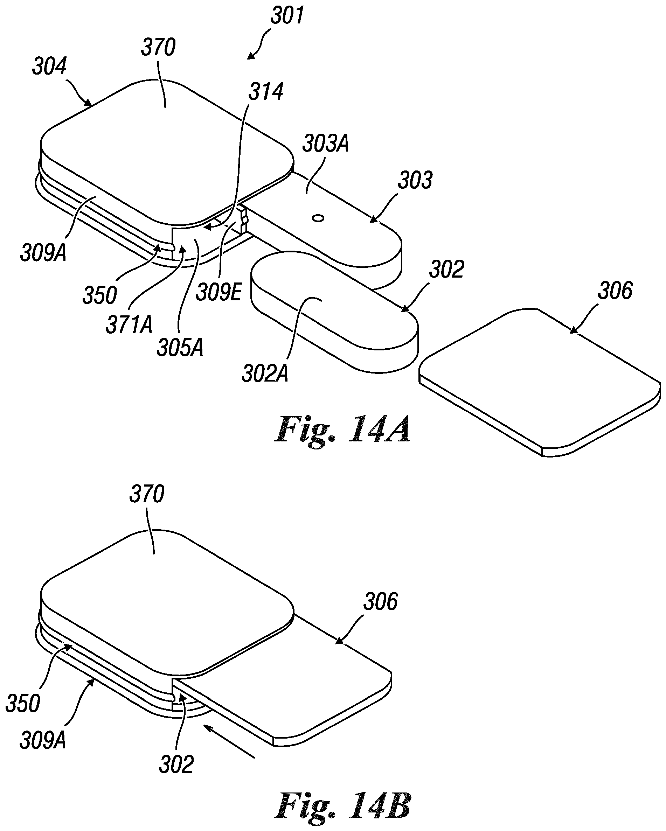

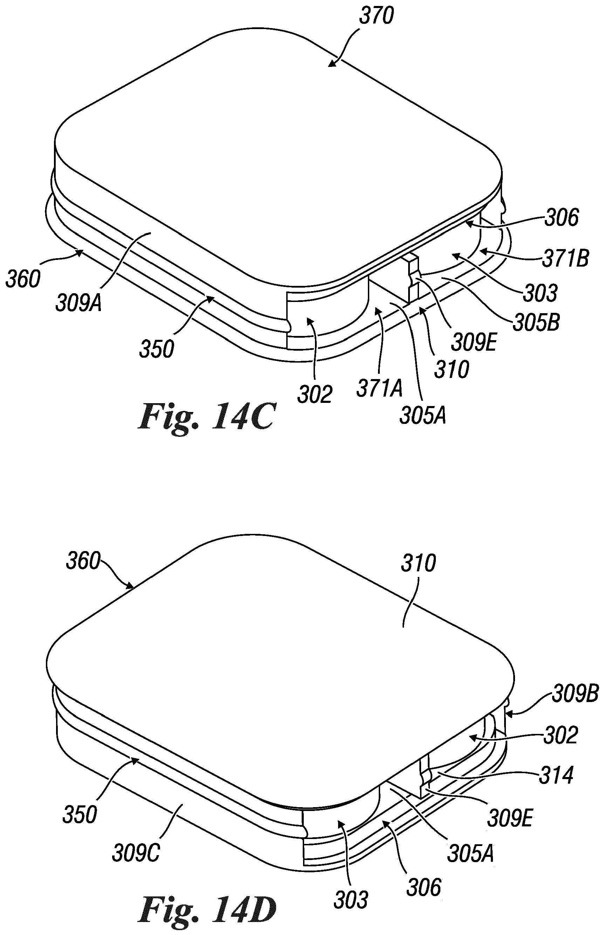

Figures 14A-D show a further possible embodiment of a housing element 302 according to the invention, wherein the body 304 of the housing element is substantially similar to the body 4 of the first embodiment of figures 1-5 (the parts in common with this first embodiment, they will be indicated in the embodiment of Figure 10 with the same numbering used in Figures 1-5 but increased by 300). However, according to this variant, in addition to the side walls 309A-D, the central one 309E and the bottom wall 310, the body 304 also has a second bottom wall 370 opposite and parallel to the first 310. For inserting the magnets 302 and 303 one of the side walls (in the figures the wall 309B) has two openings 371A and 371B for inserting the magnets in the two seats 305A and 305B divided from each other by the central wall 309E. The latter departs from the bottom wall 310 and is spaced from the other bottom wall 370 so as to create a space for the insertion of the plate 306 which is positioned in contact with the inner face of the wall 370 and in contact with the faces 303A and 302A of the two magnets (as shown in Fig. 14D ).

Preferably, retaining members (not shown, however of the type similar to the one described in the previous embodiments) are provided to improve the retention of the magnets 302, 303 in the seats 305A and 305B, which are adapted to hold the magnets by friction in the seats once they have been inserted, while also allowing the magnets to be removed by exerting a predetermined, relevant extraction force on the magnets, for example by using a screwdriver inserted in a space provided between the magnets and the inner surfaces of the walls of the seats 105A and 105B. The retaining members comprise, for example, ribs raised with respect to the surface of the side walls and / or the surfaces of the central wall. The ribs are sized in such a way that they hold the magnets by friction once they have been inserted in the respective seats 305A and 305B and can be provided on all or only some of the side and central walls. Instead of the ribs, the magnet retaining members could also provide other usual retaining elements, for example horizontal steps or ribs adapted to hold the magnets once they have been pushed into the seats below these horizontal steps and / or ribs. The retaining members, and in particular the ribs, could also be provided on the side walls of the magnets and / or both on the side walls of the magnets and on the surfaces delimiting the seats 105A and 105B.

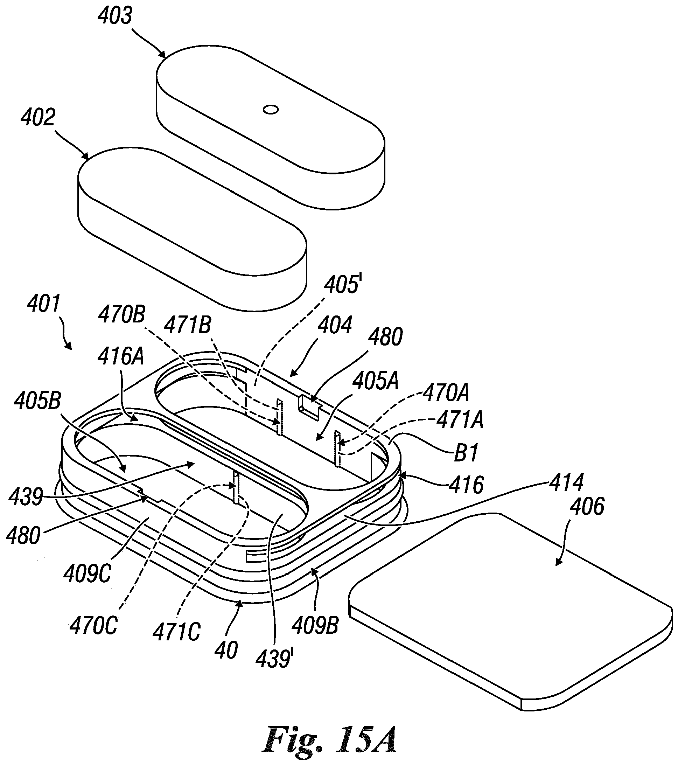

Figures 15A-D show a variant of the embodiment of figures 1-5 (the parts in common with this first embodiment will be indicated in the embodiment of figures 15A-D with the same numbering used in figures 1-5 but increased by 400). According to this variant, the slot 416 for inserting the plate 406 is not provided at the bottom wall 410, but at the free edge B1 of the body 404 which delimits the openings of the seats 405A-B for inserting the magnets 402 and 403, and the central wall 409E also has a slot 416A (Fig. 15A) at the same height as the slot 416 of the wall 409B.

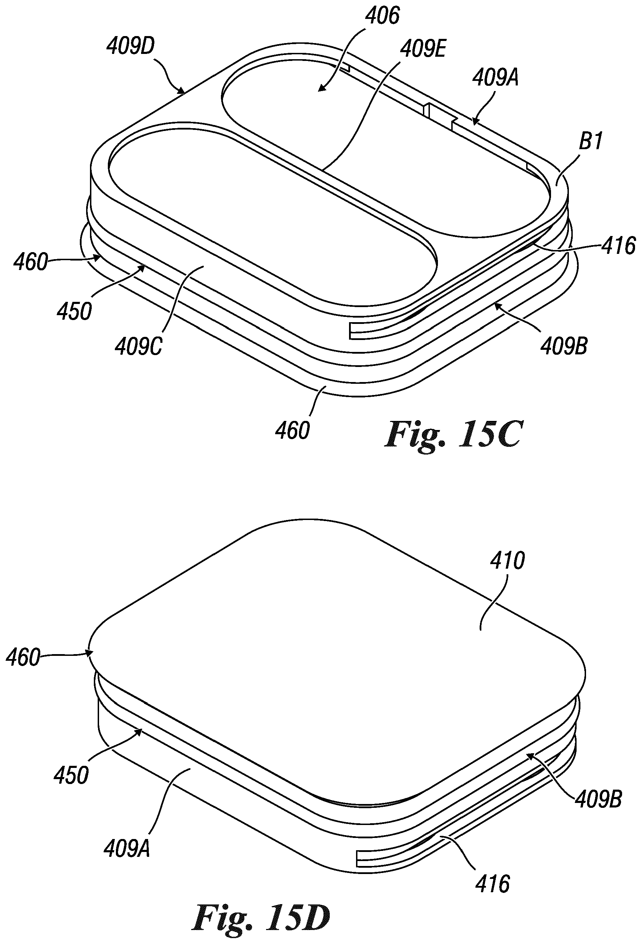

Thanks to the slots 416 and 416A, when the plate 406 is inserted, it forms a wall for closing the seats 405A and 405B into which the magnets 402 and 403 are inserted (as shown in Fig. 15C).

Preferably, retaining members 470A-C (dashed in fig. 15A) are provided to improve the retention of the magnets 402, 403 in the seats 405A and 405B, which are adapted to hold the magnets by friction in the seats once they have been inserted, while also allowing the magnets to be removed by exerting a predetermined, relevant extraction force on the magnets, for example by using a screwdriver inserted in a pocket 480 of the seats 405A and 405B. The retaining members 470A-C comprise, for example, ribs 471A-C raised with respect to the surface 409A'-D' of the side walls 409A-D and / or the surfaces 439E' of the central wall 439E. The ribs 471A-C are sized in such a way that they hold the magnets by friction once they have been inserted in the respective seats 405A and 405B and can be provided on all or only some of the side and central walls. Instead of the ribs, the magnet retaining members could also provide other usual retaining elements, for example horizontal steps or ribs adapted to retain the magnets once they have been pushed into the seats below these horizontal steps and / or ribs. The retaining members, and in particular the ribs, could also be provided on the side walls of the magnets and / or both on the side walls of the magnets and on the surfaces delimiting the seats 405A and 405B.

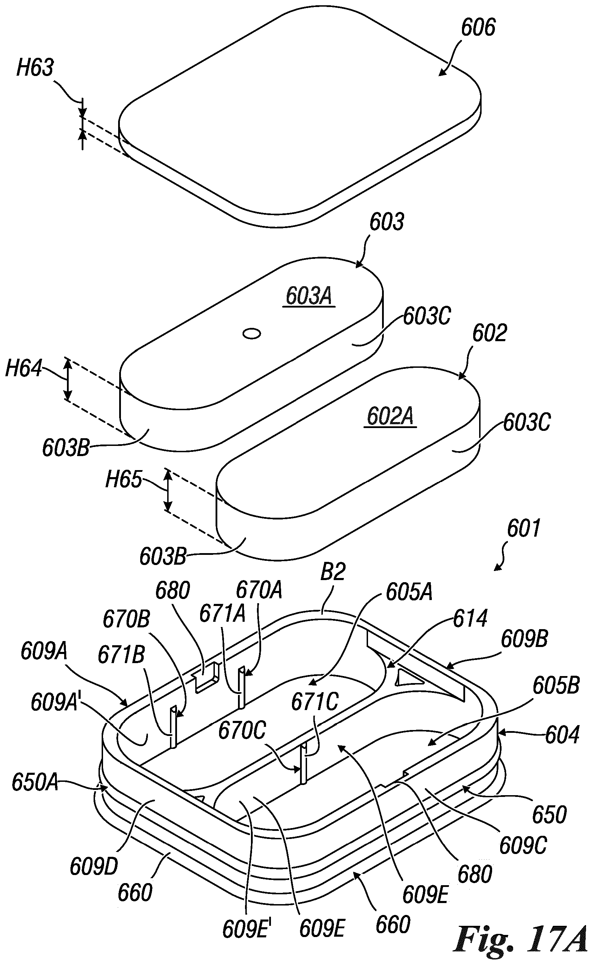

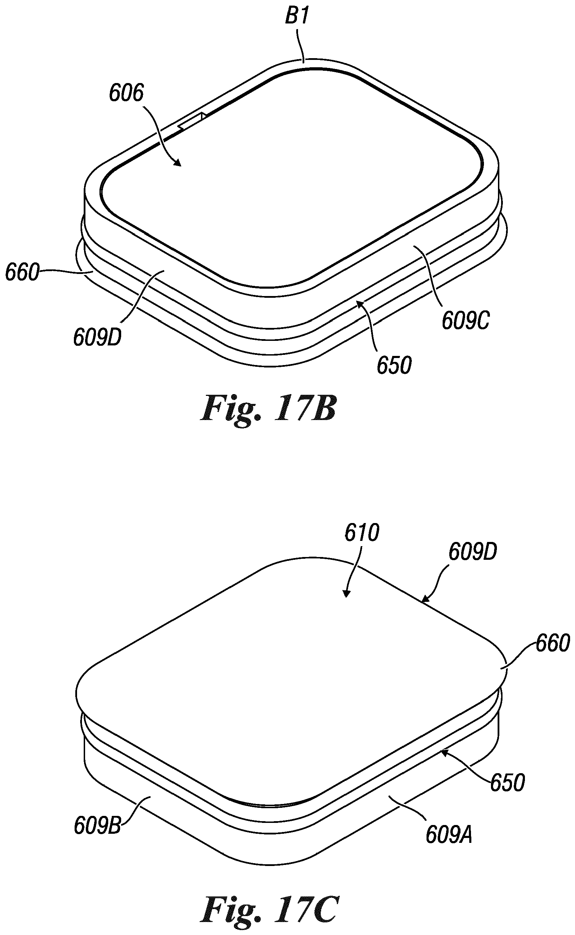

Figures 17A-D show a variant of the embodiment of figures 1-5 (the parts in common with this first embodiment will be indicated in the embodiment of figures 17A-D with the same numbering used in figures 1-5 but increased by 600). According to this variant, the body 604 of the housing element does not provide a slot for inserting the plate 606, which according to this variant is housed flush with the free edge B2 of the side walls 609A-D of the body 604 and above the edge free B3 of the central wall 609E, so as to close the housing element.

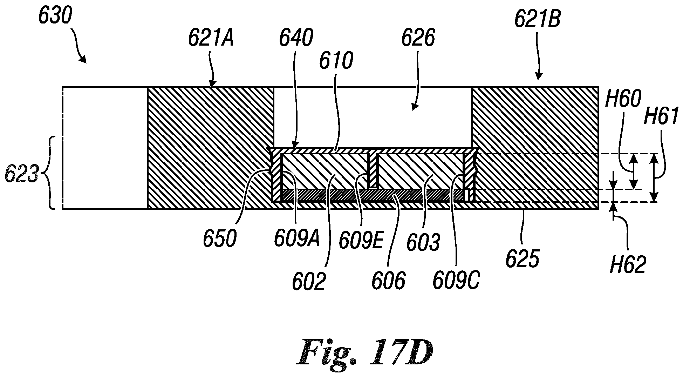

According to this variant, the body 604 has two seats 605A and 605B each adapted to house a magnet 603, 602. These seats are delimited by the side walls 650 A-D and by the central wall 609E. The latter has a height H60 (fig. 17D) lower than the height H62 of the side walls, the difference H62 between the two heights H60 and H61 is equal to the thickness H63 (fig. 17 A) of the plate 606 so as to create a seat 650 (fig. 17A) in the open part of the housing element for housing the plate 606 which, when housed in this seat, closes the housing element (as shown in fig. 17B) and at the same time is hold in the seat itself by the magnetic force of the two magnets 603 and 602 housed in the two seats 605A and 605B and which have their face 603A, 602A in contact with the plate. As shown in fig. 17D the two magnets 602 and 603 have the same shape and the same dimensions as the seats 605A and 605B, so that the side walls 603B, 603C and 602B, 602C of the two magnets are in contact with the respective inner surfaces 609A'-D' of the side walls 609A-D and of the central wall 609E of the body 604 of the housing element. And the height H64 and H65 (fig. 17A) of the magnets is substantially equal to the height H60 of the central wall 609E. Preferably, retaining members 670A-C (fig. 17A) are provided to improve the retention of the magnets 602, 603 in the seats 605A and 605B, which are adapted to hold the magnets by friction in the seats once they have been inserted, while also allowing the magnets to be removed by exerting a predetermined, relevant extraction force on the magnets, for example by using a screwdriver inserted in a pocket 680 of the seats 605A and 605B. The retaining members 670A-C comprise, for example, ribs 671A-C raised with respect to the surface 609A'-D' of the side walls 609A-D and / or the surfaces 609E' of the central wall 609E. The ribs 671A-C are sized in such a way that they hold the magnets by friction once they have been inserted in the respective seats 605A and 605B and can be provided on all or only some of the side and central walls. Instead of the ribs, the magnet retaining members could also provide other usual retaining elements, for example horizontal steps or ribs adapted to hold the magnets once they have been pushed into the seats below these horizontal steps and / or ribs. The retaining members, and in particular the ribs, could also be provided on the side walls of the magnets and / or both on the side walls of the magnets and on the surfaces delimiting the seats 605A and 605B.

Thanks to the retaining members 670A-C, the assembly of the housing element is facilitated, in fact, once the magnets 603 603B have been inserted in the relative seats 605A and 605B, the magnets remain constrained in the seats, thanks to the friction with the retaining members. Therefore, when the plate 606 is then positioned over the magnets, the latter do not move from their seat and do not attach to the plate unless it comes into contact with the upper surface which remains visible of the magnets themselves. The plate 606 is kept in its final position by the magnets and does not require further additional elements for its firm positioning, such as for example screws that engage with the body of the connecting element, or a frictional interlocking with the walls of the body of the connecting element that delimit the seat in which the plate is housed.

A possible interlocking male-female connecting system will also be described below, by way of non-limiting example, of a magnet housing element, and in particular of the housing element as shown in figures 1-5, with a support and guide magnetic structure 30, also of the type previously described and shown in Figures 6-8.

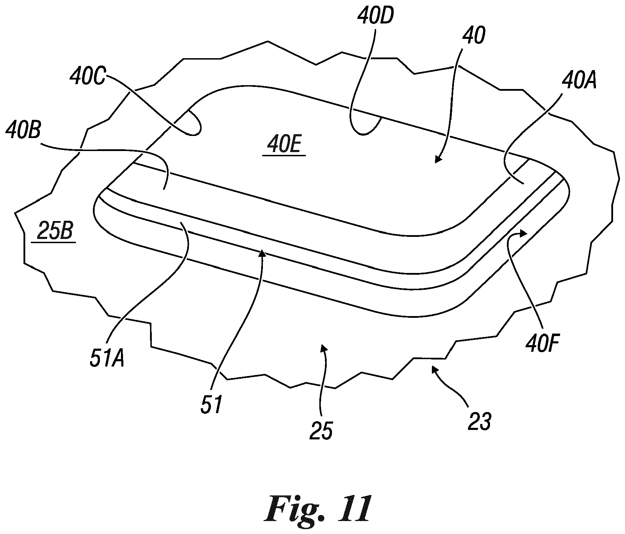

The support component 23 of the structure 30, provides a plurality of recessed seats 40 (fig. 7 and 11) at its second surface 25 (the one opposite the surface 24 from which the pairs of guides 21A, 22A; 22A, 22B; 22B, 22C; 22C, 22D; 22D 22E depart; 22E, 21B shown in fig. 6 depart) which are shaped and sized in such a way that they can each house a housing element 1 for at least two magnets 2, 3, preferably for two magnets, and preferably, but not necessarily, of the type described above.

The seats 40 include side walls 40A-D and a bottom wall 40E which delimit the seat itself, an opening 40F for inserting the housing element 1. The seats 40 have a shape and dimensions corresponding to that of the housing elements that must be inserted in the seats, so as to be able to house them preferably without clearances in the seats themselves.

The housing element 1 comprises: a body 4 having at least two seats 5A, B (fig. 1) for housing the at least two magnets 2, 3 and preferably also one plate 6 (fig. 3) in a ferromagnetic material, wherein said body 4 comprises side walls 9A-D and preferably also a bottom wall 10.

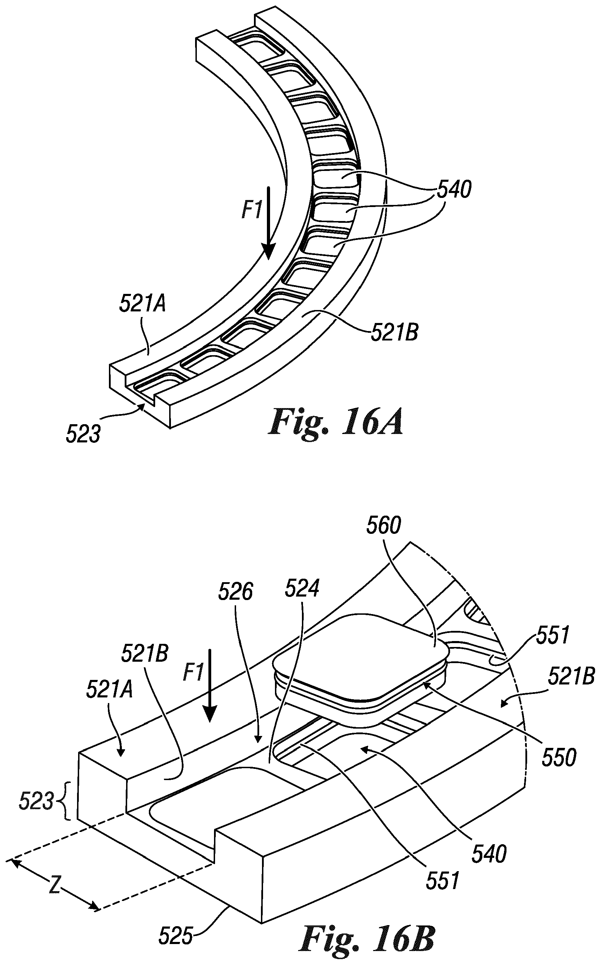

According to the preferred embodiment in question, the seats 40 are provided in the second surface 25 of the support component 23 and in positions K (figs. 7 and 16) which extend at least below the sliding channel 26. In this area, as shown in fig. 7, the thickness of the wall 24B of the support and guide structure 30 is very small (for example between 1 mm and 5 mm, more preferably equal to about 1.5 mm) and the effect of the magnets 2, 3 housed in the housing elements on the conveyor 28, and in particular on the parts thereof, made of ferromagnetic material, which move in the sliding channel 26, is at its maximum.

The seat are preferably uniformly spaced from each other at least below the sliding channel 26 so as to guarantee a uniform magnetic effect along each pair of guides of the support and guide structure 30.

For connecting the housing elements 1 in the seats 40, the surfaces of at least one of the side walls 40A-D of the seats 40 and at least one of the external surfaces of the corresponding side walls 9A-D of the body 4 of the housing element 1, comprise coupling male-female members 50 and respective counter members 51, adapted to snap together the coupling elements 1 when these are forcibly pushed into the respective seats 40. According to a preferred embodiment, the outer surface D (fig. 13) of at least one of the side walls 9A-D of the body 4 of the housing element provides a projection 50A, for example with a rounded cross-section, protruding by a portion T1 (fig. 13) from the external surface itself, and adapted to snap-on engage into a corresponding recess 51A having matching shape and section, provided along at least one corresponding side wall 40A-D of the seat 40. Preferably, the projection 50A and the corresponding recess 51A are continuous and extend along all the respective walls 9A-D and 40A-D. According to the invention, the projection and the recess could also be provided in the walls 40A-D of the seat 40 and along the side walls 9A-D of the body 4 of the coupling element, respectively.

It has surprisingly been experimentally verified that to ensure a reliable connection of the coupling element it is sufficient that the projections 50 protrude with respect to the external surface D of the walls 9A-D by a section T1 having dimensions between 0.3 mm and 0.7 mm and more preferably equal to about 0.5 mm and that the recess 51A also has similar or slightly greater depths.

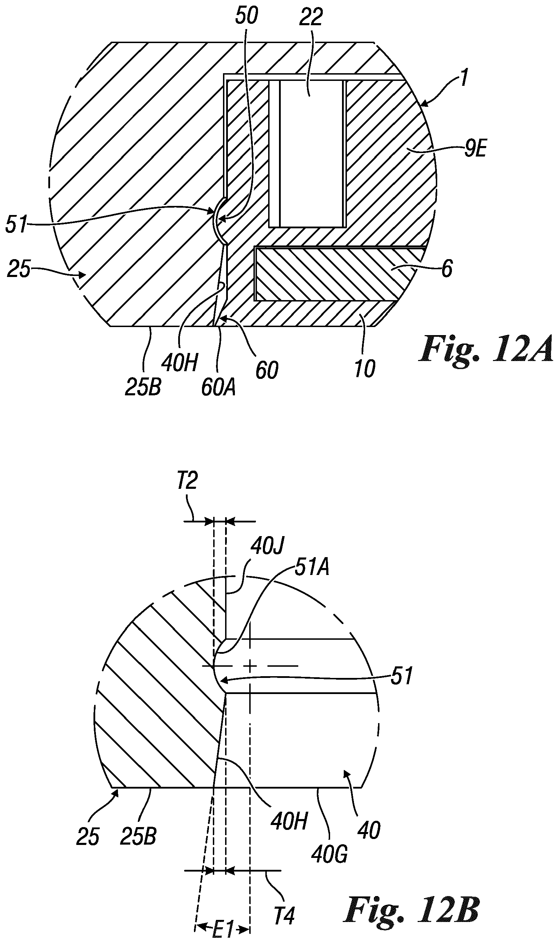

Preferably, moreover, to improve the coupling, the projections 50 are provided at a height H1 from the wall 10 comprised between about 30% and 50% of the total height H2 of the coupling element 1 and more preferably equal to about 40% of this height, and that the recess 51A is also provided at the same heights with respect to the overall height of the seat 40. Preferably, to facilitate the insertion of the coupling element 1, the seat 40 has an inclined part 40H, at the edge 40G thereof (fig. 12B) that delimits the opening for the insertion the coupling element 1, which is adapted to form a countersink, which extends up to the recess 51A, so as to facilitate the snap of the projection 50A of the coupling element in said recess 51A and the connection of the coupling element 1 in the seat 40. Advantageously, the wall 40H is inclined with respect to a vertical by an angle E1 between 5° and 9° and more preferably equal to about 7.5°.

The side walls (40A-D) that delimit the seat 40 thus comprise preferably a first inclined part 40H, which is connected with a recessed coupling part 51 which in turn is connected with a substantially vertical final part 40J.

Thanks to the coupling members 50 and respective counter members 51, the housing elements can be connected in a simple and quick way to the support and guide structure 30, without the need to use screws or other usual connecting members, thus facilitating and speeding up the assembly of the housing elements with the support and guide structures.

Advantageously, the coupling elements 1 also comprise a sealing member 60 (fig. 13A) adapted to avoid particles of unwanted material from penetrating inside the seats 40 when said coupling elements are connected in the relative seats 40 of the support and guide structure 30. According to a first embodiment, the sealing member 60 comprises a preferably continuous lip 60A (fig. 13A) and departing from the wall 10 of the body 4 of the coupling element and that actually forms a preferably continuous extension of the external edge of said wall 10. According to a preferred embodiment, the lip 60A has a pointed shape and comprises, for example, a first wall 61A coplanar to the external surface of the wall 10 and a second wall 61B inclined with respect to a vertical by an angle E2 between 30° and 50° and more preferably equal to about 45°, in such a way that the lip 60A ends in a point. The inclined wall 60B connects with the side walls 9A-D of the body 4 of the coupling element 1.

Preferably, the lip 60A extends horizontally by a portion T3 greater than the corresponding portion T1 of the projection 50; this facilitates the connection of the projection 50 into the respective recess 51 while ensuring, at the same time, perfect and reliable sealing of the coupling element when inserted in the relative seat 40.

Thanks to the particular pointed shape of the lip 60A, when the coupling element is inserted in the relative seat 40 the pointed end of the lip 60A can be partially deformed (as shown in Fig. 12A) against the walls that delimit the edge of the seat 40, so as to ensure a reliable sealing between the element 1 and the seat 40. For this purpose, the width T3 (fig. 13A) of the lip 60A is greater than the width T4 (fig. 12B) created at the seat 40 inlet opening by the first inclined part 40H of the side walls of the seat 40 with respect to the second vertical part 40J of said walls; the difference between said two widths T3 and T4 being for example between 0.1 mm and 0.5 mm.

According to a variant shown in fig. 13B, the sealing member 60 could also comprise an elastic gasket ring 60B, for example an O ring, housed in a seat 10K suitably shaped and made at the outer edge of the wall 10 of the body 4 of the coupling element 1. Advantageously, the gasket 60B also has a width T3' substantially similar to the corresponding width T3 of the lip 60A, and has the same sealing behaviour as this lip 60A.

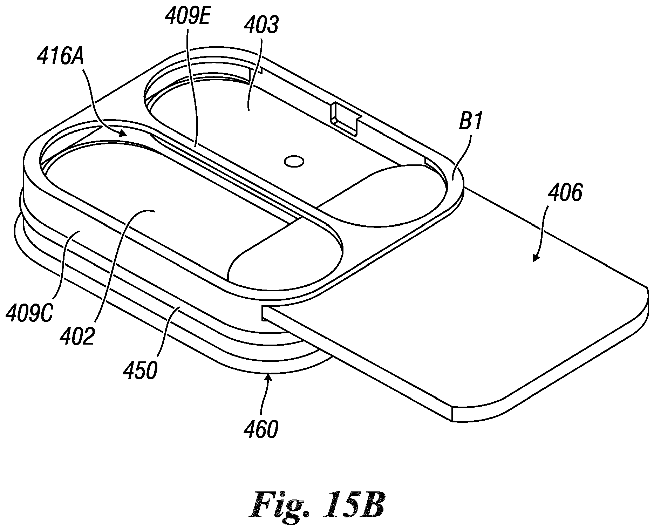

Figures 16A-B show a second embodiment of the guide structure 30 shown in figures 6-8, (the parts in common with this first embodiment will be indicated in the embodiment of figures 16A-B with the same numbering used in figures 6-8 but increased by 500). In this second embodiment the housing seats 540 are provided again in the support component 523 from which the pairs of guides 521A and 521B depart and between the guides themselves, but these seats are open at the upper surface 524 (fig. 16) of this support element and not at the other surface 525 (as in fig. 7). This location of the seats facilitates the positioning of the housing elements in the dedicated seats. Preferably when the seats 540 are open at the top as in figs. 16, the housing elements are of the type shown in figures 14 and 15, so that the magnets are as close as possible to the sliding channel 526 delimited by the guides 521A and 521B. The housing elements are connected to the seats 540 in any known way, but are preferably connected with the male-female coupling members 550, 551 previously described, and which will therefore not be further illustrated here. Preferably, the housing elements also provide a sealing member 560 of the same type as the member 60 previously described.

As shown in fig. 17D the housing element of Figures 17A-C can be inserted in the seats 640 of a guide structure 630 similar to that of figures 16A-B, (the parts in common with this first embodiment of figures 16A-B will be indicated in the embodiment of figures 17D with the same numbering used in figure 16A-B but increased by 100). In this embodiment, the housing seats 640 again are provided in the support component 623 from which the pairs of guides 621A and 621B depart, and between the guides themselves, but these seats are open at the upper surface of this support element and not at the other surface 625 (as in fig. 7). This location of the seats facilitates the positioning of the housing elements in the dedicated seats. Preferably, when the seats 640 are open at the top as in fig. 17D the housing elements are of the type shown in figures 17A-C, so that the magnets are as close as possible to the sliding channel 626 delimited by the guides 621A and 621B. The housing elements are connected to the seats 640 in any known way but are preferably connected to the male-female coupling members and counter members 650 previously described, and which will therefore not be further illustrated here. Preferably, the housing elements also provide a gasket member 660 of the same type as the member 60 previously described.

Finally, it should be noted that the housing element could include numerous variants all falling within the same inventive concept. For example, the housing element could have a single side wall and, for example, have a flattened cylindrical shape with a regular or irregular circular cross section. The housing element could also contain a single magnet, in this case coupling elements with positive and negative polarity would be alternated in the seats of the guide structure. According to a further variant, the plate 6 could also be provided outside the seats in which the magnets are housed. For example, the plate could be provided to rest against the external surface 10A (fig. 2) of the wall 10 of the housing element and be removably constrained to this wall 10A by means of connecting members 801 (fig. 2) of the usual type, for example teeth protruding from the surface 10A (dashed in fig. 2) and suitably shaped.

## Claims

1. A housing element (1; 101; 201; 301; 401; 601) for at least two magnets (2, 3; 102, 103; 202, 203; 302, 303; 402, 403; 602, 603), of the type adapted to be associated with a support and guide magnetic structure (30), said housing element (1; 101; 201; 301; 401; 601) being adapted to hold a conveyor with articulated links (28) movable along said support and guide structure (20) joined with said support and guide structure; wherein the housing element comprises a body (4; 104, 204, 304; 404, 604) comprising:
- at least one side wall (9A-D; 109A-D; 209A-D; 309A-D; 409A-D; 609A-D), one bottom wall (10), and one central wall (9E; 109E; 209E; 309E; 409E; 609E) and said walls delimit in the body (4; 104, 204, 304; 404, 604) at least two seats (5A, 5B; 105A, 105B; 205A, 205B; 305A, 305B; 405A, 405B; 605A, 605B) for housing said at least two magnets,
- at least two openings (7, 8) for inserting the at least two magnets in said at least two seats for the magnets (5A, 5B; 105A, 105B; 205A, 205B; 305A, 305B; 405A, 405B; 605A, 605B);
- the body (4; 104, 204, 304; 404, 604) having at least one seat comprising a part (14; 114; 214; 314; 414; 614) which is shaped and sized in such a way that it can house a plate (6; 306; 406; 606) in a ferromagnetic material, adapted to come into contact with said at least two magnets;
- said body (4; 104, 204, 304; 404, 604) comprising at least one retaining part (71A-C; 171A-C; 271A-C; 371A-C; 471A-C; 671A-C) thereof, adapted to hold said at least two magnets constrained to said body in a predetermined position (P1), in order to facilitate the positioning and / or handling of the magnets and the assembly of the housing element;
**characterized in that**:
said retaining part (71A-C; 171A-C; 271A-C; 371A-C;
471A-C; 671A-C) is sized and shaped in such a way that it holds the magnets constrained in said at least two seats (5A, 5B; 105A, 105B; 205A, 205B; 305A, 305B;
405A, 405B; 605A, 605B) for the magnets by friction of the surfaces of said magnets and of said two seats for the magnets, which are in contact with each other;
and **in that** the ferromagnetic plate (6; 306; 406; 606) is holdable in its part (14; 114; 214; 314; 414; 614) at least by the magnetic force of the magnets and the friction connection of the magnets in the relative magnet seats.

2. The housing element according to claim 1, **characterized in that** the retaining part (71A-C; 171A-C; 271A-C; 371A-C; 471A-C; 671A-C) sized and shaped in such a way that it holds the magnets constrained in said at least two seats (5A, 5B; 105A, 105B; 205A, 205B; 305A, 305B; 405A, 405B; 605A, 605B) for the magnets by friction of the surfaces of said magnets and of said two seats for the magnets, which are in contact with each other, comprises at least one rib (71A-C; 171A-C; 271A-C; 371A-C; 471A-C; 671A-C), raised with respect to: the surface (609A'-D') of the side walls (609A-D) and / or the surfaces (609E') of the central wall (609E) of the body (4; 104, 204, 304; 404, 604) of the housing element, and / or to the external surface of the magnets (2, 3; 102, 103; 202, 203; 302, 303; 402, 403; 602, 603).

3. The housing element according to the preceding claims, **characterized in that** the side walls (609A-D) and / or the central wall (609E) of the body (4; 104, 204, 304; 404, 604) of the housing element also delimit the part (14; 114; 214; 314; 414; 614) sized and shaped in such a way as to house the plate (6; 306; 406; 606) in a ferromagnetic material, wherein said plate, when housed in this seat, closes the housing element and at the same time is held in the seat itself by the magnetic force of the at least two magnets;
and wherein said at least two magnets have a face thereof (603A, 602A) in contact with the plate (606).

4. The housing element according to the preceding claims, **characterized in that** the ferromagnetic plate (6; 306; 406; 606) is held in its part by the action of
the magnet and not even by friction of the external surfaces of the plate with those of the seat in which said plate is housed.

5. The housing element according to the preceding claims, **characterized in that** the at least two seats (5A, 5B; 105A, 105B; 205A, 205B; 305A, 305B; 405A, 405B; 605A, 605B) for the magnets provide at least one pocket (80; 180; 280; 380; 480; 680) at an edge of said seats, where a tool can be inserted for removing the magnets from their seats, and adapted to exert on the magnets a greater force with respect to the friction force that holds the magnets in their seats.

6. The housing element according to one or more of the preceding claims, **characterized in that** at least one of the external surfaces of the side walls (9A-D) of the body (4) comprises members (50) for connecting the housing element (1) to respective counter members (51) provided in at least one side wall (40A-D) of a seat (40) of said support and guide structure (20), wherein said connecting members and counter members are of the male-female type and are adapted to snap-on connect the coupling element (1) when the latter is forcibly pushed into said seat (40);
and **in that**, preferably, the member (50) for connecting the housing element (1) comprises one or more of the following characteristics:
- the external surface (D) of at least one of the side walls (9A-D) of the body (4) of the housing element has a projection (50A), for example with a rounded cross-section, protruding by a portion (T1) from the external surface itself, and adapted to snap-on engage into a corresponding recess (51A) having matching shape and section, provided along at least one corresponding side wall (40A-D) of the seat (40) and which forms the connecting counter members (51);
- and / or the projection (50A) and the corresponding recess (51A) are continuous and extend along all the respective walls (9A-D, 40A-D);
- and / or the projections (50) protrude with respect to the external surface (D) of the walls (9A-D) by a portion (T1) having dimensions between 0.3 mm and 0.7 mm and more preferably equal to about 0.5 mm, and that also the recess (51A) has similar or slightly greater depths;
- and / or the projections (50) are provided at a height (H1) from the bottom wall (10) between about 30% and 50% of the total height (H2) of the coupling element (1) and more preferably equal to about 40% of this height.

7. The housing element according to one or more of the preceding claims, **characterized in that** the coupling elements (1) comprise a sealing member (60) adapted to avoid particles of unwanted material from penetrating inside the seats (40) when said coupling elements are connected in dedicated seats (40) provided in the support and guide structure (30);
- and **in that**, preferably, the sealing member (60) comprises a preferably continuous lip (60A) and departing from a wall (10) of the body (4) of the coupling element so as to form a preferably continuous extension of the outer edge of said wall (10), and wherein at least one end portion of said lip (60A) is adapted to come into contact with and seal against a respective edge portion of the seat (40) ;
wherein, preferably:
- the lip (60A) has a pointed shape and comprises, for example, a first wall (61A) coplanar to the external surface of the wall (10) and a second wall (61B) inclined in such a way that the lip (60A) ends in a point, in which the inclined wall (60B) connects with the side walls (9A-D) of the body (4) of the coupling element (1);
- and / or the lip (60A) extends horizontally by a portion (T3) greater than the corresponding portion (T1) of the projection (50) of the member for snap-on connecting the housing element in the relative seat of the support and guide structure (30);
- and / or the lip (60A) is shaped in such a way that the pointed end of the lip (60A) deforms partially against the walls delimiting the edge of the seat (40) when the coupling element is inserted in the relative seat (40) of the support and guide structure (30), so as to ensure a reliable sealing between the element (1) and the seat (40);
- and / or the width (T3) of the lip (60A) is greater than the width (T4) created at the seat (40) inlet opening by the first inclined part (40H) of the side walls of the seat (40) with respect to the second vertical part (40J) of said walls; the difference between said two widths (T3, T4) being for example between 0.1 mm and 0.5 mm;
- and / or the lip (60A) is shaped like an elastic gasket ring (60B), for example an O ring, housed in a seat (10K) suitably shaped and made at the outer edge of the wall (10) of the body (4) of the coupling element (1).

8. The housing element according to one or more of the preceding claims, **characterized in that** the ferromagnetic plate (6) is housed in a seat communicating with the at least two seats (5A, 5B) of the body (4) in which also the at least two magnets (2, 3) are housed,
- **in that** said at least two magnets (2, 3) when housed in said at least two seats (5A, 5B) are also in contact with said ferromagnetic plate,
- and **in that** said body (4) comprises at least one retaining part thereof (15), adapted to hold the magnets themselves in the seat for said plate in a predetermined position (P1), even when it is desired to insert and / or extract them from said seats for the magnets, so as to facilitate the positioning and / or handling of the magnets themselves and the assembly of the housing element;
- and **in that**, preferably, the body (4) of the housing element (1) comprises:
o at least one side wall (9A-D), one bottom wall (10), one central wall (9E) and **in that** said walls delimit in the body (4) said at least two seats (5A, 5B) for housing said at least two magnets (2, 3) and the plate (6),
o and **in that** the retaining part (15) of the body (4) comprises said central wall (9E), in which a first edge (9E') of said central wall (9E) facing said bottom wall (10), is spaced from this bottom wall (10) by a distance (T), and **in that** said plate (6) has a thickness (S) equal to or slightly less than said distance (T) of the edge (9E') of the central wall (9E), so as to allow said plate (6) to be housed between said bottom wall (10) and said edge (9E');
and / or preferably:
the at least one side wall (9A-D) of the body (4) has, near the bottom wall (10), a slot (16) adapted to allow the plate (6) to be inserted into said at least two seats (5A, 5B) for housing said at least two magnets (2, 3) and the plate (6), preferably in contact with the internal face (10A) of the bottom wall (10), and below and preferably in contact with the first edge (9E') of the central wall (9E).

9. The housing element according to one of the preceding claims, **characterized in that** the body (4) of the housing element (1) comprises: at least one side wall (9A-D), one bottom wall (10) and one central wall (9E), and **in that** said walls delimit in the body (4) two seats (5A, 5B) separated from each other by said central wall, for housing two magnets (2, 3), and **in that** the body (4) has a substantially flat box-like shape, wherein said body (4) is a closed body with the exception of: two openings (7, 8) provided at the two seats (5A, 5B) for the magnets (2, 3), and an opening provided in said at least one side wall (9A-D) of the body (4), for also inserting the ferromagnetic plate (6) in the body (4) in said two seats (5A, 5B), and **in that** the magnets are sized in such a way that they can be completely housed inside the body (4), preferably with their face (2A, 3A) visible, which remains substantially flush with the free edge of the at least one side wall (9A-D), and the other face in contact with the plate.

10. The housing element according to one or more of the preceding claims, **characterized in that** the body (104) of the housing element (101) comprises:
- at least one side wall (109A-D), one bottom wall (110), one central wall (109E) and **in that** said walls delimit in the body (104) said at least two seats (105A, 105B) for housing said at least two magnets (2, 3) and the plate (6),
- wherein the body (104) comprises at least two parts (104A, 104B) which can be connected together by means of conventional connecting members (140A, 140B), for example of the snap-on or friction type, and for example of the male-female type,
- wherein said two parts (104A, 104B) define, when connected to each other, at least the two seats (5A, 5B) for housing the at least two magnets (2, 3) and the plate (6) in a ferromagnetic material and form said at least one side wall (109A-D),
- wherein a first part (104B) of said two parts comprises a first zone (106) shaped and sized to house therein at least the ferromagnetic plate (6),
- wherein said first part (104B) is delimited by a bottom wall (110) and first portions of at least one side wall (109A-D), departing from this bottom wall,
- wherein a second part (104A) of said two parts comprises two zones (105A-B) to house therein the magnets (2, 3),
- wherein said second part (104A) comprises second portions of the at least one side wall (109A-D) and a central wall (109E), adapted to delimit said two zones for housing the magnets,
- wherein when said two parts are connected to each other, a first edge (109E') of said central wall (109E) facing said bottom wall (110) is spaced from this bottom wall (110) by a distance (T), so as to allow said plate (6) to be housed between said bottom wall (110) and said lower edge (109E'),
- wherein said plate (6) has a thickness (S) equal to or slightly less than said distance (T) of the edge (109E') of the central wall (109E), so as to allow said plate (6) to be housed between said bottom wall (110) and said edge (109E').

11. The housing element according to one or more of the preceding claims, **characterized in that** the body (204) of the housing element (201) comprises:
- at least one side wall (209A-D), one bottom wall (210), one central wall (239E) and **in that** said walls delimit in the body (204) said at least two seats (205A-B) for housing said at least two magnets (2, 3) and the plate (6),
- and **in that** the retaining part of the body (204) comprises said central wall (239E), in which a first edge (209E') of said central wall (239E) facing said bottom wall (210), is spaced from this bottom wall (210) by a distance (T), so as to allow said plate (6) to be housed between said bottom wall (210) and said lower edge (209E'),
- wherein said plate (6) has a thickness (S) equal to or slightly less than said distance (T) of the edge (209E') of the central wall (209E), so as to allow said plate (6) to be housed between said bottom wall (210) and said edge (209E'),
- **in that** the central wall (239) provides connecting members (240A) to removably connect said central part to at least one (209B, 209D) of the side walls of the body (204), so that the ferromagnetic plate (6) can be inserted in the body (4) when this central wall (239) is removed and so that said ferromagnetic plate (6) can be firmly blocked in the body (204) when said central wall (239) is connected to the body (204).

## Patentansprüche

1. Gehäuseelement (1; 101; 201; 301; 401; 601) für mindestens zwei Magnete (2, 3; 102, 103; 202, 203; 302, 303; 402, 403; 602, 603) des Typs, der angepasst ist, um mit einer magnetischen Trag- und Führungsstruktur (30) assoziiert zu sein, wobei das Gehäuseelement (1; 101; 201; 301; 401; 601) angepasst ist, um einen Förderer mit gelenkigen Gliedern (28) zu halten, der entlang der Trag- und Führungsstruktur (20) beweglich ist und mit der Trag- und Führungsstruktur verbunden ist,
wobei das Gehäuseelement einen Körper (4; 10 4, 204, 304; 404, 604) umfasst, umfassend:
- mindestens eine Seitenwand (9A-D; 109A-D; 209A-D; 309A-D; 409A-D; 609A-D), eine Bodenwand (10) und eine mittlere Wand (9E; 109E; 209E; 309E; 409E; 609E) und diese Wände begrenzen in dem Körper (4; 10 4, 204, 304; 404, 604) mindestens zwei Sitze (5A, 5B; 105A, 105B; 205A, 205B; 305A, 305B; 405A, 405B; 605A, 605B) zum Unterbringen der mindestens zwei Magnete,
- mindestens zwei Öffnungen (7, 8) zum Einsetzen der mindestens zwei Magnete in die mindestens zwei Sitze für die Magnete (5A, 5B; 105A, 105B; 205A, 205B; 305A, 305B; 405A, 405B; 605A, 605B);
- wobei der Körper 4; 10 4, 204, 304; 404, 604) mindestens einen Sitz aufweist, umfassend ein Teil (14; 114; 214; 314; 414; 614), das auf eine Weise geformt und bemessen ist, dass es eine Platte (6; 30 6; 4 0 6; 60 6) aus einem ferromagnetischen Material unterbringen kann, die angepasst ist, um mit den mindestens zwei Magneten in Kontakt zu kommen;
- der Körper (4; 104, 204, 304; 404, 604) umfassend mindestens ein Halteteil (71A-C; 171A-C; 271A-C; 371A-C; 471A-C; 671A-C) davon, das geeignet ist, die mindestens zwei Magnete in einer vorbestimmten Position (P1) an dem Körper zu halten, um das Positionieren und/oder Handhaben der Magnete und den Zusammenbau des Gehäuseelements zu erleichtern;
**dadurch gekennzeichnet, dass**:
das Halteteil (71A-C; 171A-C; 271A-C; 371A-C; 471A-C; 671A-C) auf eine Weise bemessen und geformt ist, dass es die Magnete durch Reibung der Oberflächen der Magnete und der zwei Sitze für die Magnete, die miteinander in Kontakt sind, in den mindestens zwei Sitzen (5A, 5B; 105A, 105B; 205A, 205B; 305A, 305B; 405A, 405B;
605A, 605B) für die Magnete hält,
und dass die ferromagnetische Platte (6; 306; 406; 606) zumindest durch die Magnetkraft der Magnete und die Reibungsverbindung der Magnete in den jeweiligen Magnetsitzen in ihrem Teil (14; 114; 214; 314; 414; 614) haltbar ist.

2. Gehäuseelement nach Anspruch 1, **dadurch gekennzeichnet, dass** das Halteteil (71A-C; 171A-C; 271A-C; 371A-C; 471A-C; 671A-C) auf eine Weise bemessen und geformt ist, dass es die Magnete durch Reibung der Oberflächen der Magnete und der zwei Sitze für die Magnete, die miteinander in Kontakt sind, in den mindestens zwei Sitzen (5A, 5B; 105A, 105B; 205A, 205B; 305A, 305B; 405A, 405B; 605A, 605B) für die Magnete hält, mindestens eine Rippe (71A-C; 171A-C; 271A-C; 371A-C; 471A-C; 671A-C) umfasst, die in Bezug auf Folgendes erhaben ist: die Oberfläche (609A'-D') der Seitenwände (609A-D) und/oder die Oberflächen (609E') der mittleren Wand (609E) des Körpers (4; 104, 204, 304; 404, 604) des Gehäuseelements und/oder die Außenfläche der Magnete (2, 3; 102, 103; 202, 203; 302, 303; 402, 403; 602, 603).

3. Gehäuseelement nach den vorherigen Ansprüchen, **dadurch gekennzeichnet, dass** die Seitenwände (609A-D) und/oder die mittlere Wand (609E) des Körpers (4; 104, 204, 304; 404, 604) des Gehäuseelements auch das Teil (14; 114; 214; 314; 414; 614) begrenzen, das auf eine Weise bemessen und geformt ist, um die Platte (6; 306; 406; 606) aus einem ferromagnetischen Material aufzunehmen, wobei die Platte, wenn sie in diesem Sitz aufgenommen ist, das Gehäuseelement verschließt und gleichzeitig durch die Magnetkraft der mindestens zwei Magnete in dem Sitz an sich gehalten wird;
und wobei die mindestens zwei Magnete eine Fläche (603A, 602A) von ihnen haben, die in Kontakt mit der Platte (606) ist.

4. Gehäuseelement nach den vorherigen Ansprüchen, **dadurch gekennzeichnet, dass** die ferromagnetische Platte (6; 306; 406; 606) durch die Wirkung des Magneten und nicht einmal durch Reibung der Außenflächen der Platte mit denen des Sitzes, in dem die Platte untergebracht ist, in ihrem Teil gehalten wird.

5. Gehäuseelement nach einem der vorherigen Ansprüche, **dadurch gekennzeichnet, dass** die mindestens zwei Sitze (5A, 5B; 105A, 105B; 205A, 205B; 305A, 305B; 405A, 405B; 605A, 605B) für die Magnete mindestens eine Tasche (80; 180; 280; 380; 480; 680) an einem Rand der Sitze bereitstellen, in die ein Werkzeug zum Entfernen der Magnete aus ihren Sitzen eingeführt werden kann, und die angepasst ist, um auf die Magnete eine größere Kraft in Bezug auf die Reibungskraft auszuüben, die die Magnete in ihren Sitzen hält.

6. Gehäuseelement nach einem oder mehreren der vorherigen Ansprüche, **dadurch gekennzeichnet, dass** mindestens eine der Außenflächen der Seitenwände (9A-D) des Körpers (4) Elemente (50) zum Verbinden des Gehäuseelements (1) mit entsprechenden Gegenelementen (51) umfasst, die in mindestens einer Seitenwand (40A-D) eines Sitzes (40) der Trag- und Führungsstruktur (20) bereitgestellt sind, wobei die Verbindungselemente und Gegenelemente vom Typ Stecker-Buchse sind und angepasst sind, um das Kupplungselement (1) durch Einrasten zu verbinden, wenn letzteres kräftig in den Sitz (40) gedrückt wird,
und dass vorzugsweise das Element (50) zum Verbinden des Gehäuseelements (1) eine oder mehrere der folgenden Eigenschaften umfasst:
- die Außenfläche (D) mindestens einer der Seitenwände (9A-D) des Körpers (4) des Gehäuseelements weist einen Vorsprung (50A), beispielsweise mit einem abgerundeten Querschnitt, auf, der um einen Abschnitt (T1) von der Außenfläche an sich hervorsteht und angepasst ist, um in eine entsprechende Aussparung (S1A) einzurasten, die passende Form und passenden Querschnitt aufweist, die entlang mindestens einer entsprechenden Seitenwand (40A-D) des Sitzes (40) bereitgestellt ist und die die verbindenden Gegenelemente (51) bildet;
- und/oder der Vorsprung (50A) und die entsprechende Aussparung (51A) sind durchgehend und erstrecken sich entlang aller jeweiligen Wände (9A-D, 40A-D);
- und/oder die Vorsprünge (50) stehen in Bezug auf die Außenfläche (D) der Wände (9A-D) um einen Abschnitt (T1) mit Abmessungen zwischen 0,3 mm und 0,7 mm und vorzugsweise etwa 0,5 mm hervor, und dass auch die Aussparung (51A) ähnliche oder etwas größere Tiefen aufweist,
- und/oder die Vorsprünge (50) sind in einer Höhe (H1) von der Bodenwand (10) zwischen etwa 30 % und 50 % der Gesamthöhe (H2) des Kupplungselements (1) und vorzugsweise in einer Höhe von etwa 40 % dieser Höhe bereitgestellt.

7. Gehäuseelement nach einem oder mehreren der vorherigen Ansprüche, **dadurch gekennzeichnet, dass** die Kupplungselemente (1) ein Dichtungselement (60) umfassen, das angepasst ist, um ein Eindringen von Teilchen aus unerwünschtem Material in das Innere der Sitze (40) zu verhindern, wenn die Kupplungselemente in dedizierten Sitzen (40) verbunden sind, die in der Trag- und Führungsstruktur (30) bereitgestellt sind,
- und dadurch, dass das Dichtungselement (60) vorzugsweise eine vorzugsweise durchgehende Lippe umfasst und von einer Wand (10) des Körpers des Kupplungselements ausgeht, um eine vorzugsweise durchgehende Verlängerung des äußeren Rands der Wand (10) zu bilden, und wobei mindestens ein Endabschnitt der Lippe (60A) angepasst ist, um mit einem jeweiligen Randabschnitt des Sitzes (40) in Kontakt zu kommen und dagegen abzudichten;
wobei vorzugsweise:
- die Lippe (60A) eine spitze Form aufweist und beispielsweise eine erste Wand (61A) koplanar zu der Außenfläche der Wand (10) und eine zweite Wand (61B), die auf eine Weise geneigt ist, dass die Lippe (60A) an einem Punkt endet, an dem die geneigte Wand (60B) mit den Seitenwänden (9A-D) des Körpers (4) des Kupplungselements (1) verbunden ist, umfasst;
- und/oder sich die Lippe (60A) horizontal um einen Abschnitt (T3) erstreckt, der größer ist als der entsprechende Abschnitt (T1) des Vorsprungs (50) des Elements zum Verbinden durch Einrasten, das das Gehäuseelement in dem jeweiligen Sitz der Trag- und Führungsstruktur (30) verbindet;
- und/oder die Lippe (60A) auf eine Weise geformt ist, dass sich das spitze Ende der Lippe (60A) teilweise gegen die Wände verformt, die den Rand des Sitzes (4 0) begrenzen, wenn das Kupplungselement in den jeweiligen Sitz (40) der Trag- und Führungsstruktur (30) eingesetzt wird, um eine zuverlässige Abdichtung zwischen dem Element (1) und dem Sitz (40) zu gewährleisten;
- und/oder die Breite (T3) der Lippe (60A) größer ist als die Breite (T4), die an der Einlassöffnung des Sitzes (40) durch das erste geneigte Teil (40H) der Seitenwände des Sitzes (40) in Bezug auf das zweite vertikale Teil (40J) der Wände entsteht; wobei der Unterschied zwischen den zwei Breiten (T3, T4) beispielsweise zwischen 0,1 mm und 0,5 mm ist;
- und/oder die Lippe (60A) die Form eines elastischen Dichtungsrings (60B), z. B. eines O-Rings, aufweist, der in einem Sitz (10K) untergebracht ist, der auf geeignete Weise geformt und an dem äußeren Rand der Wand (10) des Körpers (4) des Kupplungselements (1) gefertigt ist.

8. Gehäuseelement nach einem oder mehreren der vorherigen Ansprüche, **dadurch gekennzeichnet, dass** die ferromagnetische Platte (6) in einem Sitz untergebracht ist, der mit den mindestens zwei Sitzen (5A, 5B) des Körpers (4) in Verbindung ist, in dem auch die mindestens zwei Magnete (2, 3) untergebracht sind,
- dass die mindestens zwei Magnete (2, 3), wenn sie in den mindestens zwei Sitzen (5A, 5B) untergebracht sind, auch in Kontakt mit der ferromagnetischen Platte sind,
- und dass der Körper (4) mindestens ein Halteteil (15) davon umfasst, das angepasst ist, um die Magnete an sich im Sitz für die Platte an einer vorbestimmten Position (P1) zu halten, auch wenn es gewünscht ist, sie in die Sitze für die Magnete einzusetzen und/oder daraus herauszuziehen, um das Positionieren und/oder Handhaben der Magnete an sich und die Montage des Gehäuseelements zu erleichtern;
- und dass vorzugsweise der Körper (4) des Gehäuseelements (1) Folgendes umfasst:
o mindestens eine Seitenwand (9A-D), eine Bodenwand (10), eine mittlere Wand (9E) und dadurch, dass die Wände in dem Körper (4) die mindestens zwei Sitze (5A, 5B) zum Unterbringen der mindestens zwei Magnete (2, 3) und der Platte (6) begrenzen,
o und dass das Halteteil (15) des Körpers (4) die mittlere Wand (9E) umfasst, wobei eine erste Kante (9E') der mittleren Wand (9E), die der Bodenwand (10) zugewandt ist, von dieser Bodenwand (10) um einen Abstand (T) beabstandet ist, und dass die Platte (6) eine Stärke (S) aufweist, die gleich wie oder geringfügig kleiner als der Abstand (T) des Rands (9E') der mittleren Wand (9E) ist, um zu ermöglichen, dass die Platte (6) zwischen der Bodenwand (10) und dem Rand (9E') untergebracht wird,
und/oder vorzugsweise:
die mindestens eine Seitenwand (9A-D) des Körpers (4) in der Nähe der Bodenwand (10) einen Schlitz (16) aufweist, der angepasst ist, um zu ermöglichen, dass die Platte (6) in die mindestens zwei Sitze (5A, 5B) zum Unterbringen der mindestens zwei Magnete (2, 3) und
der Platte (6) eingesetzt wird, vorzugsweise in Kontakt mit der Innenfläche (10A) der Bodenwand (10), und unterhalb und vorzugsweise in Kontakt mit dem ersten Rand (9E') der mittleren Wand (9E).

9. Gehäuseelement nach einem der vorherigen Ansprüche, **dadurch gekennzeichnet, dass** der Körper (4) des Gehäuseelements (1) Folgendes umfasst: mindestens eine Seitenwand (9A-D), eine Bodenwand (10) und eine mittlere Wand (9E), und dass die Wände in dem Körper (4) zwei Sitze (5A, 5B) begrenzen, die durch die mittlere Wand voneinander getrennt sind, um zwei Magnete (2, 3) aufzunehmen, und dass der Körper (4) eine im Wesentlichen flache, kastenartige Form aufweist, wobei der Körper (4) ein geschlossener Körper ist, mit Ausnahme von: zwei Öffnungen (7, 8), die an den zwei Sitzen (5A, 5B) für die Magnete (2, 3) bereitgestellt sind, und eine Öffnung, die in der mindestens einen Seitenwand (9A-D) des Körpers (4) bereitgestellt ist, um auch die ferromagnetische Platte (6) in den Körper (4) in die zwei Sitze (5A, 5B) einzusetzen, und dass die Magnete auf eine Weise bemessen sind, dass sie vollständig im Inneren des Körpers (4) untergebracht werden können, vorzugsweise mit ihrer Fläche (2A, 3A) sichtbar, die im Wesentlichen mit dem freien Rand der mindestens einen Seitenwand (9A-D) und der anderen Seite in Kontakt mit der Platte bündig bleibt.

10. Gehäuseelement nach einem oder mehreren der vorherigen Ansprüche, **dadurch gekennzeichnet, dass** der Körper (104) des Gehäuseelements (101) Folgendes umfasst:
- mindestens eine Seitenwand (109A-D), eine Bodenwand (110), eine mittlere Wand (109E) und dass die Wände in dem Körper (104) die mindestens zwei Sitze (105A, 105B) zum Unterbringen der mindestens zwei Magnete (2, 3) und der Platte (6) begrenzen,
- wobei der Körper (104) mindestens zwei Teile (104A, 104B) umfasst, die mittels konventioneller Verbindungselemente (140A, 140B), zum Beispiel vom Einrast- oder Reibungstyp und zum Beispiel vom Typ Stecker-Buchse miteinander verbunden werden können,
- wobei die zwei Teile (104A, 104B), wenn sie miteinander verbunden sind, mindestens die zwei Sitze (5A, 5B) zum Unterbringen der mindestens zwei Magnete (2, 3) und der Platte (6) aus einem ferromagnetischen Material definieren und die mindestens eine Seitenwand (109A-D) bilden,
- wobei ein erstes Teil (104B) der zwei Teile eine erste Zone (106) umfasst, die geformt und bemessen ist, um mindestens die ferromagnetische Platte (6) aufzunehmen,
- wobei das erste Teil (104B) durch eine Bodenwand (110) und erste Abschnitte mindestens einer Seitenwand (109A-D), die von dieser Bodenwand ausgehen, begrenzt ist,
- wobei ein zweites Teil (104A) der zwei Teile zwei Zonen (105A-B) umfasst, um darin die Magnete (2, 3) unterzubringen,
- wobei das zweite Teil (104A) zweite Abschnitte der mindestens einen Seitenwand (109A-D) und eine mittlere Wand (109E) umfasst, die angepasst sind, um die zwei Zonen zum Unterbringen der Magnete zu begrenzen,
- wobei, wenn die zwei Teile miteinander verbunden sind, ein erster Rand (109E') der mittleren Wand (109E), die der Bodenwand (110) zugewandt ist, von dieser Bodenwand (110) um einen Abstand (T) beabstandet ist, um zu ermöglichen, dass die Platte (6) zwischen der Bodenwand (110) und dem unteren Rand (109E') untergebracht wird,
- wobei die Platte (6) eine Stärke aufweist, die gleich wie oder etwas geringer ist als der Abstand (T) des Rands (109E') der mittleren Wand (109E), um zu ermöglichen, dass die Platte (6) zwischen der Bodenwand (110) und dem Rand (109E') untergebracht wird.

11. Gehäuseelement nach einem oder mehreren der vorherigen Ansprüche, **dadurch gekennzeichnet, dass** der Körper (204) des Gehäuseelements (201) Folgendes umfasst:
- mindestens eine Seitenwand (209A-D), eine Bodenwand (210), eine mittlere Wand (239E) und dass die Wände in dem Körper (204) die mindestens zwei Sitze (205AB) zum Unterbringen der mindestens zwei Magnete (2, 3) und der Platte (6) begrenzen,
- und dass das Halteteil des Körpers (204) die mittlere Wand (239E) umfasst, wobei ein erster Rand (209E') der mittleren Wand (239E), die der Bodenwand (210) zugewandt ist, von dieser Bodenwand (210) um einen Abstand (T) beabstandet ist, um zu ermöglichen, dass die Platte (6) zwischen der Bodenwand (210) und dem unteren Rand (209E') untergebracht wird,
- wobei die Platte (6) eine Stärke (S) aufweist, die gleich wie oder etwas geringer ist als der Abstand (T) des Rands (209E') der mittleren Wand (209E), um zu ermöglichen, dass die Platte (6) zwischen der Bodenwand (210) und dem Rand (209E') untergebracht wird,
- dass die mittlere Wand (239) Verbindungselemente (240A) bereitstellt, um das mittlere Teil lösbar mit mindestens einer (209B, 209D) der Seitenwände des Körpers (204) zu verbinden, sodass die ferromagnetische Platte (6) in den Körper (4) eingesetzt werden kann, wenn diese mittlere Wand (239) entfernt wird, und sodass die ferromagnetische Platte (6) fest in dem Körper (204) blockiert werden kann, wenn die mittlere Wand (239) mit dem Körper (204) verbunden ist.

## Revendications

1. Boîtier (1; 101; 201; 301; 401; 601) pouvant contenir au moins deux aimants (2, 3; 102, 103; 202, 203; 302, 303; 402, 403; 602, 603), du type adapté pour être associé à une structure magnétique de support et de guidage (30), ledit boîtier (1 ; 101 ; 201 ; 301 ;
401 ; 601) étant adapté pour contenir un convoyeur avec des maillons articulés (28) mobiles le long de ladite structure de support et de guidage (20) jointe à ladite structure de support et de guidage ; dans lequel le boîtier comprend un corps (4 ; 104, 204, 304 ;
404, 604) comprenant :
- au moins une paroi latérale (9A-D ; 109A-D ; 209A-D ; 309A-D ; 409A-D ; 609AD), une paroi de fond (10), et une paroi centrale (9E ; 109E ; 209E ; 309E ; 409E ; 609E) et lesdites parois délimitent dans le corps (4 ; 104, 204, 304 ; 404, 604) au moins deux sièges (5A, 5B ; 105A, 105B ; 205A, 205B ; 305A, 305B ; 405A, 405B ; 605A, 605B) permettant de loger lesdits au moins deux aimants,
- au moins deux ouvertures (7,8) permettant d'insérer les au moins deux aimants dans lesdits au moins deux sièges pour aimants (5A, 5B ; 105A, 105B ; 205A, 205B ; 305A, 305B ; 405A, 405B ; 605A, 605B) ;
- le corps (4 ; 104, 204, 304 ; 404, 604) ayant au moins un siège comprenant une partie (14 ; 114 ; 214 ; 314 ; 414 ; 614) qui est formée et calibrée de manière à pouvoir loger une plaque (6 ; 306 ; 406 ; 606) en matériau ferromagnétique, adaptée pour entrer en contact avec lesdits au moins deux aimants ;
- ledit corps (4 ; 104, 204, 304 ; 404, 604) comprenant au moins une partie de retenue (71A-C ; 171A-C ; 271A-C ; 371A-C ; 471A-C ; 671A-C) de celui-ci, adaptée pour maintenir lesdits au moins deux aimants attachés audit corps dans une position prédéterminée (P1), de manière à faciliter le positionnement et / ou la manipulation des aimants et l'assemblage du boîtier ;
**caractérisé en ce que**:
ladite partie de retenue (71A-C ; 171A-C ; 271A-C ; 371A-C ; 471A-C ; 671A-C) est formée et calibrée de façon à maintenir les aimants contraints dans lesdits au moins deux sièges (5A, 5B ; 105A, 105B ; 205A, 205B ; 305A, 305B ; 405A, 405B ; 605A, 605B) pour aimants par la friction des surfaces desdits aimants et desdits deux sièges d'aimants, qui sont en contact l'un avec l'autre ; et **en ce que** la plaque ferromagnétique (6 ; 306 ; 406 ; 606) pouvant être maintenue dans sa partie (14 ; 114 ; 214 ; 314 ; 414 ; 614) au moins par la force magnétique des aimants et la liaison par friction des aimants dans les sièges des aimants relatifs.

2. Boîtier selon la revendication 1, **caractérisé en ce que** la partie de retenue (71A-C ; 171A- C ; 271A-C ; 371A-C ; 471A-C ; 671A-C) est calibrée et formée de façon à maintenir les aimants contraints dans lesdits au moins deux sièges (5A, 5B ; 105A, 105B ; 205A, 205B ; 305A, 305B ; 405A, 405B ; 605A, 605B) pour aimants par friction des surfaces desdits aimants et desdits deux sièges pour aimants, qui sont en contact l'un avec l'autre, comprend au moins une nervure (71A-C ; 171A-C ; 271A-C ; 371A-C ; 471A-C ; 671A-C), surélevée par rapport à : la surface (609A'-D') des parois latérales (609A-D) et/ou les surfaces (609E') de la paroi centrale (609E) du corps (4 ; 104, 204, 304 ; 404, 604) du boîtier, et/ou la surface externe des aimants (2, 3 ; 102, 103 ; 202, 203 ; 302, 303 ; 402, 403 ; 602, 603).

3. Boîtier selon les revendications précédentes, **caractérisé en ce que** les parois latérales (609A-D) et/ou la paroi centrale (609E) du corps (4 ; 104, 204, 304 ; 404, 604) du boîtier délimitent également la partie (14 ; 114 ; 214 ; 314 ; 414 ; 614) calibrée et formée de façon à loger la plaque (6 ; 306 ; 406 ; 606) dans un matériau ferromagnétique, dans lequel ladite plaque, lorsqu'elle est logée dans ce siège, ferme le boîtier et est en même temps maintenue dans le siège lui-même par la force magnétique d'au moins deux aimants; et dans lequel lesdits au moins deux aimants ont une de leurs faces (603A, 602A) en contact avec la plaque (606).

4. Boîtier selon les revendications précédentes, **caractérisé en ce que** la plaque ferromagnétique (6 ; 306 ; 406 ; 606) est maintenue dans sa partie par l'action de l'aimant et non pas par le frottement des surfaces externes de la plaque avec celles du siège dans lequel ladite plaque est logée.

5. Boîtier selon les revendications précédentes, **caractérisé en ce que** les au moins deux sièges (5A, 5B ; 105A, 105B ; 205A, 205B ; 305A, 305B ; 405A, 405B ; 605A, 605B) pour les aimants comportent au moins une poche (80 ; 180 ; 280 ; 380 ; 480 ; 680) sur un bord desdits sièges, où un outil peut être inséré pour retirer les aimants de leurs sièges, et adapté pour exercer sur les aimants une force supérieure à la force de frottement qui maintient les aimants dans leurs sièges.

6. Boîtier selon une ou plusieurs des revendications précédentes, **caractérisé en ce qu'**au moins une des surfaces externes des parois latérales (9A-D) du corps (4) comprend des éléments (50) de connexion du boîtier (1) à des contre-éléments respectifs (51) prévus dans au moins une paroi latérale (40A-D) d'un siège (40) de ladite structure de support et de guidage (20), où ces éléments de connexion et contre-éléments sont du type mâle-femelle et sont adaptés pour connecter par encliquetage l'élément de couplage (1) lorsque ce dernier est poussé de force dans ledit siège (40) ;
et **en ce que**, de préférence, l'élément (50) de connexion du boîtier (1) présente une ou plusieurs des caractéristiques suivantes :
- la surface externe (D) d'au moins une des parois latérales (9A-D) du corps (4) du boîtier présente une saillie (50A), par exemple de section arrondie, dépassant d'une partie (T1) de la surface externe elle-même, et adaptée pour s'enclencher dans un encoche correspondant (S1A) de forme et de section adaptées, prévu le long d'au moins une paroi latérale correspondante (40A-D) du siège (40) et qui forme les contre-éléments de connexion (51) ;
- et/ou la saillie (50A) et l'encoche correspondant (51A) sont continus et s'étendent le long de toutes les parois respectives (9A-D, 40A-D) ;
- et/ou les saillies (50) dépassent la surface externe (D) des parois (9A-D) d'une partie (T1) dont les dimensions sont comprises entre 0,3 mm et 0,7 mm et, de préférence, égales à environ 0,5 mm, et que l'encoche (51A) présente également des profondeurs similaires ou légèrement supérieures ;
- et/ou les saillies (50) sont situées à une hauteur (H1) par rapport à la paroi inférieure (10) comprise entre environ 30 % et 50 % de la hauteur totale (H2) de l'élément de couplage (1) et, de préférence, égale à environ 40 % de cette hauteur.

7. Boîtier selon une ou plusieurs des revendications précédentes, **caractérisé en ce que** les éléments de couplage (1) comprennent un élément d'étanchéité (60) adapté pour éviter que des particules de matériaux indésirables ne pénètrent à l'intérieur des sièges (40) lorsque lesdits éléments de couplage sont connectés dans des sièges dédiés (40) prévus dans la structure de support et de guidage (30) ;
- et **en ce que**, de préférence, l'élément d'étanchéité (60) comprend une lèvre (60A), de préférence continue, qui part d'une paroi (10) du corps (4) de l'élément de couplage de manière à former une extension, de préférence continue, du bord extérieur de ladite paroi (10), et dans laquelle au moins une extrémité de ladite lèvre (60A) est conçue pour entrer en contact avec une partie du bord du siège (40) et assurer l'étanchéité contre celle-ci ;
dans lequel, de préférence :
- la lèvre (60A) a une forme pointue et comprend, par exemple, une première paroi (61A) coplanaire à la surface extérieure de la paroi (10) et une deuxième paroi (61B) inclinée de telle sorte que la lèvre (60A) se termine par un point, dans lequel la paroi inclinée (60B) se raccorde aux parois latérales (9A-D) du corps (4) de l'élément de couplage (1) ;
- et/ou la lèvre (60A) s'étend horizontalement sur une partie (T3) plus grande de la partie correspondante (T1) de la saillie (50) de l'élément permettant de relier par encliquetage le boîtier dans le siège relatif de la structure de support et de guidage (30) ;
- et/ou la lèvre (60A) est façonnée de telle sorte que l'extrémité pointue de la lèvre (60A) se déforme partiellement contre les parois délimitant le bord du siège (40) lorsque l'élément de couplage est inséré dans le siège relatif (40) de la structure de support et de guidage (30), de manière à assurer une étanchéité fiable entre l'élément (1) et le siège (40) ;
- et/ou la largeur (T3) de la lèvre (60A) est plus grande de la largeur (T4) créée à l'entrée du siège (40) de la première partie inclinée (40H) des parois latérales du siège (40) par rapport à la deuxième partie verticale (40J) desdites parois ; la différence entre ces deux largeurs (T3, T4) étant par exemple comprise entre 0,1 mm et 0,5 mm ;
- et/ou la lèvre (60A) a la forme d'un anneau d'étanchéité élastique (60B), par exemple un anneau o-ring, logé dans un siège (10K) de forme appropriée et réalisé sur le bord extérieur de la paroi (10) du corps (4) de l'élément de couplage (1).

8. Boîtier selon une ou plusieurs des revendications précédentes, **caractérisé en ce que** la plaque ferromagnétique (6) est logée dans un siège communiquant avec les au moins deux sièges (5A, 5B) du corps (4) dans lequel sont également logés les au moins deux aimants (2,3),
- **en ce que** lesdits au moins deux aimants (2, 3), lorsqu'ils sont logés dans lesdits au moins deux sièges (5A, 5B), sont également en contact avec ladite plaque ferromagnétique,
- et **en ce que** ledit corps (4) comprend au moins une partie de retenue (15), adaptée pour maintenir les aimants eux-mêmes dans le siège de ladite plaque dans une position prédéterminée (P1), même lorsqu'on souhaite les insérer et/ou les extraire desdits sièges pour aimants, de manière à faciliter le positionnement et/ou la manipulation des aimants eux-mêmes et l'assemblage du boîtier ;
- et **en ce que**, de préférence, le corps (4) du boîtier (1) comprend :
o au moins une paroi latérale (9A-D), une paroi de fond (10), une paroi centrale (9E) et **en ce que** lesdites parois délimitent dans le corps (4) lesdits au moins deux sièges (5A, 5B) destinés au logement desdits au moins deux aimants (2, 3) et de la plaque (6),
o et **en ce que** la partie de retenue (15) du corps (4) comprend ladite paroi centrale (9E), dans laquelle un premier bord (9E') de ladite paroi centrale (9E) faisant face à ladite paroi de fond (10), est distant de cette paroi de fond (10) d'une distance (T), et dans laquelle ladite plaque (6) présente une épaisseur (S) égale ou légèrement inférieure à ladite distance (T) du bord (9E') de la paroi centrale (9E), de manière à permettre à ladite plaque (6) d'être logée entre ladite paroi de fond (10) et ledit bord (9E') ;
et/ou de préférence :
l'au moins une paroi latérale (9A-D) du corps (4) présente, à proximité de la paroi de fond (10), une fente (16) adaptée pour permettre l'insertion de la plaque (6) dans lesdits au moins deux sièges (5A, 5B) destinés à loger lesdits au moins deux aimants (2, 3) et la plaque (6), de préférence en contact avec la face interne (10A) de la paroi de fond (10), et en dessous et de préférence en contact avec le premier bord (9E') de la paroi centrale (9E).

9. Boîtier selon l'une des revendications précédentes, **caractérisé en ce que** le corps (4) du boîtier (1) comprend : au moins une paroi latérale (9A-D), une paroi de fond (10) et une paroi centrale (9E), et **en ce que** lesdites parois délimitent dans le corps (4) deux sièges (5A, 5B) séparés l'un de l'autre par ladite paroi centrale, pour loger deux aimants (2, 3), et **en ce que** le corps (4) a une forme de boîte sensiblement plate, où ledit corps (4) est un corps fermé à l'exception de : deux ouvertures (7, 8) prévues au niveau des deux sièges (5A, 5B) pour les aimants (2, 3), et une ouverture prévue dans ladite au moins une paroi latérale (9A-D) du corps (4), pour également insérer la plaque ferromagnétique (6) dans le corps (4) dans lesdits deux sièges (5A, 5B) , et **en ce que** les aimants sont calibrés de manière à pouvoir être complètement logés à l'intérieur du corps (4), de préférence avec leur face (2A, 3A) visible, qui reste sensiblement au même niveau que le bord libre d'au moins une paroi latérale (9A-D), et l'autre face en contact avec la plaque.

10. Boîtier selon une ou plusieurs des revendications précédentes, **caractérisé en ce que** le corps (104) du boîtier (101) comprend :
- au moins une paroi latérale (109A-D), une paroi de fond (110), une paroi centrale (109E) et **en ce que** lesdites parois délimitent dans le corps (104) lesdits au moins deux sièges (105A, 105B) permettant de loger lesdits au moins deux aimants (2, 3) et la plaque (6),
- dans lequel le corps (104) comprend au moins deux parties (104A, 104B) pouvant être reliées au moyen d'éléments de connexion conventionnels (140A, 140B), par exemple du type à encliquetage ou à friction, et par exemple du type mâle-femelle,
- dans lequel ces deux parties (104A, 104B) définissent, lorsqu'elles sont reliées l'une à l'autre, au moins les deux sièges (5A, 5B) destinés à loger les au moins deux aimants (2, 3) et la plaque (6) dans un matériau ferromagnétique et forment ladite au moins une paroi latérale (109A-D),
- dans lequel une première partie (104B) de ces deux parties comprend une première zone (106) formée et calibrée pour y loger au moins la plaque ferromagnétique (6),
- dans lequel ladite première partie (104B) est délimitée par une paroi de fond (110) et par les premières parties d'au moins une paroi latérale (109A-D), partant de cette paroi de fond,
- dans lequel une deuxième partie (104A) de ces deux parties comprend deux zones (105A-B) pour y loger les aimants (2, 3),
- dans lequel ladite deuxième partie (104A) comprend des deuxièmes parties d'au moins une paroi latérale (109A-D) et d'une paroi centrale (109E), adaptées pour délimiter lesdites deux zones de logement des aimants,
- dans lequel, lorsque ces deux parties sont reliées l'une à l'autre, un premier bord (109E') de ladite paroi centrale (109E) faisant face à ladite paroi inférieure (110) est espacé de cette paroi inférieure (110) d'une distance (T), de manière à permettre à ladite plaque (6) d'être logée entre ladite paroi inférieure (110) et ledit bord inférieur (109E'),
- dans lequel ladite plaque (6) a une épaisseur (S) égale ou légèrement inférieure à ladite distance (T) du bord (109E') de la paroi centrale (109E), de manière à permettre à ladite plaque (6) d'être logée entre ladite paroi inférieure (110) et ledit bord (109E').

11. Boîtier selon une ou plusieurs des revendications précédentes, **caractérisé en ce que** le corps (204) du boîtier (201) comprend :
- au moins une paroi latérale (209A-D), une paroi de fond (210), une paroi centrale (239E) et **en ce que** lesdites parois délimitent dans le corps (204) lesdits au moins deux sièges (205A-B) permettant de loger lesdits au moins deux aimants (2, 3) et la plaque (6),
- et **en ce que** la partie de retenue du corps (204) comprend ladite paroi centrale (239E), dans laquelle un premier bord (209E') de ladite paroi centrale (239E) faisant face à ladite paroi de fond (210), est espacé de cette paroi de fond (210) d'une distance (T), de manière à permettre à ladite plaque (6) d'être logée entre ladite paroi de fond (210) et ledit bord inférieur (209E'),
- dans lequel ladite plaque (6) a une épaisseur (S) égale ou légèrement inférieure à ladite distance (T) du bord (209E') de la paroi centrale (209E), de manière à permettre à ladite plaque (6) d'être logée entre ladite paroi inférieure (210) et ledit bord (209E'),
- **en ce que** la paroi centrale (239) fournit des éléments de connexion (240A) permettant de relier de manière amovible ladite partie centrale à au moins une (209B, 209D) des parois latérales du corps (204), de sorte que la plaque ferromagnétique (6) puisse être insérée dans le corps (4) lorsque cette paroi centrale (239) est retirée et de sorte que ladite plaque ferromagnétique (6) puisse être fermement bloquée dans le corps (204) lorsque ladite paroi centrale (239) est reliée au corps (204).
